# EUROPÄISCHE PATENTSCHRIFT

(11) **EP 3 724 118 B1**
(45) Veröffentlichungstag und Bekanntmachung des Hinweises auf die Patenterteilung: **02.02.2022**
(21) Anmeldenummer: 18811579.4
(22) Anmeldetag: 07.12.2018
(51) Int. Cl.: B66B 19/00

(54) **VERFAHREN UND VORRICHTUNG ZUM KOMMISSIONIEREN EINER ZU FERTIGENDEN PERSONENTRANSPORTANLAGE DURCH ERSTELLEN EINES DIGITALEN DOPPELGÄNGERS**
METHOD AND DEVICE FOR PICKING A PASSENGER TRANSPORT SYSTEM TO BE CREATED BY CREATING A DIGITAL DOPPELGÄNGER
PROCÉDÉ ET DISPOSITIF DE PRÉPARATION D'UNE INSTALLATION DE TRANSPORT DE PERSONNES À FABRIQUER AU MOYEN DE LA CRÉATION D'UN DOUBLE NUMÉRIQUE

(30) Priorität: 14.12.2017 EP 17207399
(43) Veröffentlichungstag der Anmeldung: 21.10.2020
(73) Patentinhaber: Inventio AG, 6052 Hergiswil (CH)
(72) Erfinder: NOVACEK, Thomas, 2320 Schwechat (AT)
(86) Internationale Anmeldenummer: PCT/EP2018/083946
(87) Internationale Veröffentlichungsnummer: WO 2019/115380

(56) Entgegenhaltungen:
- WO-A1-2017/085238
- JP-A- 2005 284 830
- US-A1- 2007 250 199

## Beschreibung

Die vorliegende Erfindung betrifft ein Verfahren und eine Vorrichtung zum Kommissionieren einer zu fertigenden Personentransportanlage wie zum Beispiel eines Aufzuges, einer Fahrtreppe oder eines Fahrsteigs. Ferner betrifft die Erfindung ein Verfahren zum Fertigen einer Personentransportanlage, ein zum Durchführen bzw. Steuern eines der vorgeschlagenen Verfahren ausgebildetes Computerprogrammprodukt sowie ein dieses Computerprogrammprodukt speicherndes computerlesbares Medium.

Personentransportanlagen in Form von Aufzügen, Fahrtreppen oder Fahrsteigen dienen dazu, Personen innerhalb von Bauwerken oder Gebäuden zu befördern. Wenn ein Bauwerk mit einer Personentransportanlage ausgestattet werden soll, muss die Personentransportanlage zuerst geeignet geplant werden, dann als Ganzes oder in Teilen gefertigt werden und letztendlich in dem Bauwerk installiert werden. Ein Planungsvorgang umfasst hierbei als wesentlichen Prozess ein Kommissionieren der Personentransportanlage unter Berücksichtigung von auftragsspezifischen Kundenspezifikationen, welche unter anderem Gegebenheiten am geplanten Einbauort, aber auch Wünsche eines Kunden beispielsweise hinsichtlich einer Förderkapazität, einer Funktionalität und/oder einer Optik der zukünftigen Personentransportanlage umfassen können.

Das Kommissionieren umfasst insbesondere ein Zusammenstellen von Bauteilen, aus welchen insgesamt die vollständige Personentransportanlage zusammengebaut und im Bauwerk installiert werden kann, sowie ein geeignetes Dimensionieren der Bauteile bzw. Anpassen von Eigenschaften der Bauteile, damit jedes Bauteil eine ihm zugeordnete Funktion innerhalb der Personentransportanlage übernehmen kann.

Das Kommissionieren oder Planen der Personentransportanlage und das anschließende Fertigen der Personentransportanlage stellen herkömmlich sehr aufwändige Vorgänge dar, welche nicht oder zumindest nur zu einem gewissen Maße automatisiert durchgeführt werden konnten. Dokument US2007/250199 A1 offenbart ein Verfahren und eine Vorrichtung gemäß dem Oberbegriff der Ansprüche 1 und 10.

Es kann daher ein Bedarf an einem Verfahren und einer Vorrichtung zum Kommissionieren einer Personentransportanlage sowie an einem Verfahren zum Fertigen einer Personentransportanlage bestehen, mit welchen der Vorgang des Kommissionierens bzw. des Fertigens vereinfacht und/oder erweitert teilautomatisiert oder sogar vollautomatisiert durchgeführt werden kann. Ferner kann ein Bedarf an einem Computerprogrammprodukt zum Durchführen des Verfahrens auf einer programmierbaren Vorrichtung sowie einem computerlesbaren Medium mit einem darauf gespeicherten solchen Computerprogrammprodukt bestehen.

Einem solchen Bedarf kann durch den Gegenstand gemäß einem der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der Erfindung wird ein Verfahren zum Kommissionieren einer zu fertigenden Personentransportanlage vorgeschlagen, welches ein Erstellen eines sogenannten Kommissionierungs-Digitaler-Doppelgänger-Datensatzes der Personentransportanlage umfasst. Der Kommissionierungs-Digitaler-Doppelgänger-Datensatz umfasst Soll-Daten, welche charakterisierende Eigenschaften von Bauteilen der Personentransportanlage in einer Soll-Konfiguration wiedergeben. Das Erstellen des Kommissionierungs-Digitaler-Doppelgänger-Datensatzes umfasst zunächst ein Erstellen von Kommissionierungsdaten unter Berücksichtigung von zuvor erfassten, kundenspezifischen Konfigurierungsdaten aus generischen Bauteilmodell-Datensätzen und definierten Bauteilmodell-Datensätzen. Anschließend folgt ein Erstellen von eine Soll-Konfiguration angebenden Fertigungsdaten durch Ergänzen der Kommissionierungsdaten mit produktionsspezifischen Daten.

Gemäß einem zweiten Aspekt der Erfindung wird ein Verfahren zum Fertigen einer Personentransportanlage vorgeschlagen, welches ein Kommissionieren der Personentransportanlage mittels eines Verfahrens gemäß einer Ausführungsform des ersten Aspekts der Erfindung und ein Fertigen der Personentransportanlage mit charakterisierenden Eigenschaften, wie sie in dem Kommissionierungs-Digitaler-Doppelgänger-Datensatz angegeben sind, umfasst.

Gemäß einem dritten Aspekt der Erfindung wird eine Vorrichtung zum Kommissionieren einer Personentransportanlage vorgeschlagen, wobei die Vorrichtung dazu konfiguriert ist, einen Kommissionierungs-Digitaler-Doppelgänger-Datensatz der Personentransportanlage mit Soll-Daten, welche charakterisierende Eigenschaften von Bauteilen der Personentransportanlage in einer Soll-Konfiguration wiedergeben, zu erstellen, indem zunächst Kommissionierungsdaten unter Berücksichtigung von zuvor erfassten, kundenspezifischen Konfigurierungsdaten aus generischen Bauteilmodell-Datensätzen und definierten Bauteilmodell-Datensätzen erstellt werden und anschließend Fertigungsdaten, basierend auf denen die Personentransportanlage zu fertigen ist, durch Ergänzen der Kommissionierungsdaten mit produktionsspezifischen Daten erstellt werden.

Gemäß einem vierten Aspekt der Erfindung wird ein Computerprogrammprodukt vorgeschlagen, welches maschinenlesbare Programmanweisungen umfasst, welche bei Ausführung auf einer programmierbaren Vorrichtung die Vorrichtung zum Durchführen oder Steuern eines Verfahrens gemäß einer Ausführungsform des ersten Aspekts oder des zweiten Aspekts der Erfindung veranlassen.

Gemäß einem fünften Aspekt der Erfindung wird ein computerlesbares Medium vorgeschlagen, auf dem ein Computerprogrammprodukt gemäß einer Ausführungsform des vierten Aspekts der Erfindung gespeichert ist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend angemerkt, erforderte das Planen oder Kommissionieren einer Personentransportanlage herkömmlich einen erheblichen Arbeitsaufwand. Dies resultierte unter anderem daraus, dass zumindest manche der in einer Personentransportanlage vorhandenen Bauteile spezifisch für eine einzelne konkrete Personentransportanlage geplant und an die für diese Personentransportanlage geltenden Randbedingungen angepasst werden mussten.

Beispielsweise hängt bei einer Fahrtreppe die Länge der Fahrtreppe von den räumlichen Gegebenheiten in dem Bauwerk, das mit der Fahrtreppe ausgestattet werden soll, ab. Dies bringt einerseits mit sich, dass eine Fahrtreppe eine bestimmte Anzahl von hintereinander anzuordnenden Fahrstufen umfassen muss, um eine gewünschte Gesamtlänge der Fahrtreppe bewirken zu können. Andererseits muss auch ein Fachwerk, welches die Fahrtreppe zwischen Auflagestellen in dem Bauwerk abstützt, in seiner Länge entsprechend angepasst sein, sodass sich beispielsweise eine Länge von Obergurten und Untergurten, welche sich typischerweise über die gesamte Länge der Fahrtreppe erstrecken, von Fahrtreppe zu Fahrtreppe unterscheidet. Herkömmlich mussten insbesondere solche Bauteile, die individuell für jede einzelne zu fertigende Fahrtreppe angepasst sein müssen, einzeln und für die konkreten Bedingungen der zu fertigenden Fahrtreppe angepasst geplant und entwickelt werden.

Um einen in diesem Zusammenhang entstehenden Aufwand zu reduzieren, wird vorgeschlagen, beim Kommissionieren einer zu fertigenden Personentransportanlage einen Kommissionierungs-Digitaler-Doppelgänger-Datensatz in einer nachfolgend im Detail zu erläuternden speziellen Weise zu erstellen. Der Kommissionierungs-Digitaler-Doppelgänger-Datensatz soll Soll-Daten umfassen, welche charakterisierende Eigenschaften der beim Fertigen der Personentransportanlage eingesetzten Bauteile in einer Soll-Konfiguration wiedergeben. Daten des Kommissionierungs-Digitaler-Doppelgänger-Datensatzes können somit wie ein digitaler Doppelgänger oder ein virtuelles Abbild die zu fertigende Personentransportanlage mit ihren tatsächlich zu erreichenden Soll-Eigenschaften wiedergeben.

Die beim Erstellen des Kommissionierungs-Digitaler-Doppelgänger-Datensatzes zu berücksichtigenden charakterisierenden Eigenschaften können beispielsweise geometrische Abmessungen der Bauteile, Gewichte der Bauteile, Materialeigenschaften der Bauteile und/oder Oberflächenbeschaffenheiten der Bauteile sein. Mit anderen Worten können mehrere verschiedenartige charakterisierende Eigenschaften von einem Bauteil oder von mehreren Bauteilen einer Personentransportanlage ermittelt werden und als Daten in dem Kommissionierungs-Digitaler-Doppelgänger-Datensatz abgelegt werden. Geometrische Abmessungen der Bauteile können beispielsweise eine Länge, eine Breite, eine Höhe, ein Querschnitt, Radien, Verrundungen, etc. der Bauteile sein. Materialeigenschaften der Bauteile können beispielsweise eine zur Bildung eines Bauteils oder eines Teilbereichs eines Bauteils verwendete Materialart sein. Ferner können Materialeigenschaften auch Festigkeitseigenschaften, Härteeigenschaften, elektrische Eigenschaften, magnetische Eigenschaften, optische Eigenschaften, etc. der Bauteile sein. Oberflächenbeschaffenheiten der Bauteile können beispielsweise Rauigkeiten, Texturen, Beschichtungen, Farben, Reflektivitäten, etc. der Bauteile sein. Die charakterisierenden Eigenschaften können sich auf einzelne Bauteile oder Bauteilgruppen beziehen. Beispielsweise können sich die charakterisierenden Eigenschaften auf einzelne Bauteile beziehen, aus denen größere, komplexere Bauteilgruppen zusammengesetzt werden. Alternativ oder ergänzend können sich die Eigenschaften auch auf aus mehreren Bauteilen zusammengesetzte komplexere Gerätschaften wie zum Beispiel Antriebsmotoren, Getriebeeinheiten, Förderketten, etc. beziehen. Die charakterisierenden Eigenschaften können mit hoher Präzision ermittelt werden, beispielsweise unter Berücksichtigung von bei der Fertigung der Bauteile einzuhaltender Toleranzen.

Mit anderen Worten soll der Kommissionierungs-Digitaler-Doppelgänger-Datensatz Daten enthalten, die Bauteile, mit denen eine Personentransportanlage aufgebaut werden sollen, zumindest hinsichtlich ihrer Geometrie, vorzugsweise aber auch noch hinsichtlich anderer charakterisierender Eigenschaften, wie z.B. deren Material, deren Oberflächenbeschaffenheiten, etc., charakterisieren. Die Daten sind dabei als Soll-Daten zu verstehen, das heißt sie geben die charakterisierenden Eigenschaften der Bauteile in einer Soll-Konfiguration an, das heißt in einer Konfiguration, welche die Bauteile gemäß einer Planung ideal erweise annehmen sollten, von der real gefertigte und montierte Bauteile jedoch im Regelfall beispielsweise aufgrund von Fertigungstoleranzen, Montagetoleranzen, etc. in gewissem Maße abweichen. Die in dem Kommissionierungs-Digitaler-Doppelgänger-Datensatz enthaltenen Daten sollen dabei die charakterisierenden Eigenschaften der Bauteile ausreichend detailliert widerspiegeln, um später aus dem Kommissionierungs-Digitaler-Doppelgänger-Datensatz möglichst alle Informationen entnehmen oder ableiten zu können, die benötigt werden, um die geplante Personentransportanlage tatsächlich fertigen zu können.

Hierzu werden zunächst Kommissionierungsdaten erstellt und diese anschließend derart modifiziert, dass sich bei der Fertigung der Personentransportanlage zu verwendende Fertigungsdaten ergeben. Die Kommissionierungsdaten werden dabei unter Berücksichtigung bzw. in Abhängigkeit von kundenspezifischen Konfigurierungsdaten, das heißt Kundenspezifikationen, erstellt. Die Fertigungsdaten werden erstellt, indem die Kommissionierungsdaten dadurch weiter verfeinert beziehungsweise ergänzt werden, dass produktionsspezifische Daten, das heißt Fertigungsspezifikationen, berücksichtigt werden.

Unter Kundenspezifikationen können dabei Vorgaben verstanden werden, welche Einzelfall-spezifisch von einem Kunden zum Beispiel beim Ordern der Personentransportanlage vorgegeben werden. Die Kundenspezifikationen beziehen sich dabei typischerweise auf eine einzelne zu fertigende Personentransportanlage. Beispielsweise können die Kundenspezifikationen vorherrschende räumliche Bedingungen am Einbauort, Schnittstelleninformationen zum Anbau der Personentransportanlage an tragenden Strukturen eines Bauwerks, etc. umfassen. Anders ausgedrückt können die Kundenspezifikationen zum Beispiel angeben, welche Länge die Personentransportanlage haben soll, welcher Höhenunterschied überwunden werden soll, in welcher Weise die Personentransportanlage an tragenden Strukturen innerhalb des Gebäudes angebunden werden soll, etc. Kundenspezifikationen können auch Wünsche des Kunden hinsichtlich Funktionalität, Förderkapazität, Optik, etc. umfassen. Die Kommissionierungsdaten können beispielsweise als CAD-Datensatz vorliegen, welcher unter anderem geometrische Abmessungen und/oder andere charakterisierende Eigenschaften der die Personentransportanlage bildenden Bauteile wiedergibt.

Die Fertigungsspezifikationen beziehen sich typischerweise auf Eigenschaften oder Vorgaben innerhalb einer Fertigungsfabrik oder Fertigungslinie, in der die Personentransportanlage gefertigt werden soll. Beispielsweise können, zum Beispiel je nachdem in welchem Land oder an welchem Ort eine Fertigungsfabrik steht, in der Fertigungsfabrik verschiedene Bedingungen herrschen und/oder Vorgaben einzuhalten sein. Beispielsweise können in manchen Fertigungsfabriken bestimmte Materialien, Rohstoffe, Rohbauteile oder Ähnliches nicht verfügbar sein oder nicht verarbeitet werden. In manchen Fertigungsfabriken können Maschinen eingesetzt werden, die in anderen Fertigungsfabriken fehlen. Manche Fertigungsfabriken unterliegen aufgrund ihres Layouts Restriktionen hinsichtlich der darin zu fertigenden Personentransportanlagen bzw. Komponenten derselben. Manche Fertigungsfabriken ermöglichen einen hohen Grad an automatisierter Fertigung, wohingegen andere Fertigungsfabriken beispielsweise aufgrund niedriger Lohnkosten eher manuelle Fertigung einsetzen können. Es können noch eine Vielzahl weiterer Bedingungen und/oder Vorgaben existieren, bezüglich derer sich Fertigungsumgebungen unterscheiden können. All diese Fertigungsspezifikationen müssen typischerweise beim Planen bzw. Kommissionieren einer Personentransportanlage berücksichtigt werden, da von ihnen abhängig sein kann, in welcher Weise eine Personentransportanlage tatsächlich gebaut werden kann. Gegebenenfalls kann es erforderlich sein, anfänglich erstellte Kommissionierungsdaten, welche lediglich die Kundenspezifikationen berücksichtigt hatten, grundlegend zu modifizieren, um den Fertigungsspezifikationen Rechnung tragen zu können.

Speziell sollen beim Erstellen der Kommissionierungsdaten hierbei einerseits generische Bauteilmodell-Datensätze und andererseits definierte Bauteilmodell-Datensätze zum Einsatz kommen. Die generischen Bauteilmodell-Datensätze beschreiben dabei im Gegensatz zu den definierten Bauteilmodell-Datensätzen ein Bauteil nicht in allen seinen, für die Fertigung wesentlichen Eigenschaften. Auf Basis von generischen Bauteilmodell-Datensätzen lassen sich eine ganze Gruppe von Bauteilen in einfacher Weise kommissionieren bzw. konzipieren, indem Daten aus dem zugehörigen generischen Bauteilmodell-Datensatz fallspezifisch angepasst werden.

Konkreter und gemäß einer Ausführungsform der Erfindung sind die definierten Bauteilmodell-Datensätze Datensätze, die eine geplante Konfiguration einzelner Bauteile bezüglich aller für eine Fertigung der Personentransportanlage wesentlichen charakterisierenden Eigenschaften wiedergeben. Die generischen Bauteilmodell-Datensätze sind Datensätze, die eine geplante Konfiguration mehrerer verschiedener Bauteile bezüglich mehrerer für eine Fertigung der Personentransportanlage wesentlichen charakterisierenden Eigenschaften so wiedergeben, dass ein generischer Bauteilmodell-Datensatz durch Berücksichtigen der zuvor erfassten kundenspezifischen Konfigurationsdaten um Daten derart ergänzt werden kann, dass es ein einzelnes Bauteil bezüglich aller für eine Fertigung der Personentransportanlage wesentlichen charakterisierenden Eigenschaften wiedergibt.

Anders ausgedrückt können definierte Bauteilmodell-Datensätze als digitale Abbilder von physischen Bauteilen verstanden werden. Sie können beispielsweise als 3D-CAD-Datensatz vorliegen und zumindest die Geometrie, vorzugsweise aber auch weitere charakterisierende Eigenschaften, eines Bauteils derart ausreichend vollständig wiedergeben, dass darauf basierend das Bauteil mit für dessen Einsatz ausreichender Präzision gefertigt werden kann. Ein definierter Bauteilmodell-Datensatz kann beispielsweise als dreidimensionale Körperhülle des Bauteils angegeben sein. Dabei können auch Toleranzangaben, Oberflächenangaben beispielsweise zur Farbe, Textur, Oberflächentraurigkeit, etc., Angaben zu Materialeigenschaften sowie Schnittstelleninformationen zu angrenzenden Bauteilen in den Daten des definierten Bauteilmodell-Datensatzes enthalten sein.

Definierte Bauteilmodell-Datensätze werden insbesondere für Bauteile bereitgestellt, welche standardisiert und/oder vielfach in verschiedenen Personentransportanlagen zum Einsatz kommen. Beispielsweise werden beim Kommissionieren einer Fahrtreppe oder eines Fahrsteigs standardisierte definierte Bauteilmodell-Datensätze von simplen Bauteilen wie zum Beispiel Schrauben, Kettenglieder einer Förderkette, etc. eingesetzt. Es können aber auch definierte Bauteilmodell-Datensätze von komplexeren Bauteilen, die jedoch in einer gleichen Konfiguration oder einer Auswahl aus wenigen möglichen Konfigurationen für verschiedene Personentransportanlagen verwendet werden, eingesetzt werden. Beispielsweise können definierte Bauteilmodell-Datensätze von Handlaufeinlaufkappen, die bei allen Fahrtreppen gleich sind, oder von Trittstufen bzw. Paletten, die in einer geringen Anzahl sich hinsichtlich ihrer Breite unterscheidender Varianten für Fahrtreppen bzw. Fahrsteige unterschiedlicher Förderkapazität bereitgestellt werden, eingesetzt werden.

Im Gegensatz zu definierten Bauteilmodell-Datensätzen geben generische Bauteilmodell-Datensätze die charakterisierenden Eigenschaften zunächst nicht so vollständig an, dass ein Bauteil lediglich basierend auf dem generischen Bauteilmodell-Datensatz bereits gefertigt werden könnte. Beispielsweise kann ein generischer Bauteilmodell-Datensatz eines Bauteils zumindest hinsichtlich einer für die Fertigung wesentliche Eigenschaft unterbestimmt sein. Ein generischer Bauteilmodell-Datensatz eines Bauteils kann somit gewissermaßen als "unfertiges dreidimensionales Bauteilmodell" angesehen werden. Ein Vorteil hiervon ist, dass der generische Bauteilmodell-Datensatz aufgrund seiner Unterbestimmtheit hinsichtlich zumindest einer charakterisierenden Eigenschaft dazu eingesetzt werden kann, mehrere verschiedene Bauteile zu repräsentieren, wobei sich die verschiedenen Bauteile lediglich hinsichtlich der unterbestimmten charakterisierenden Eigenschaft voneinander unterscheiden.

Generische Bauteilmodell-Datensätze können bei der Kommissionierung einer Personentransportanlage beispielsweise für Bauteile bereitgestellt werden, die bei verschiedenen Personentransportanlagen zwar in einer ähnlichen, nicht aber in einer identischen Ausgestaltung eingesetzt werden. Der generische Bauteilmodell-Datensatz kann dabei alle charakterisierenden Eigenschaften, bezüglich derer die verschiedenen Bauteile in gleicher Weise ausgestaltet sind, vordefinieren, jedoch diejenigen charakterisierenden Eigenschaften, bezüglich in denen sich die Bauteile unterscheiden, unterbestimmt lassen.

Beispielsweise können sich Obergurte und Untergurte eines Fachwerks einer Fahrtreppe bzw. eines Fahrsteigs hinsichtlich ihrer Länge massiv unterscheiden, je nachdem wie lang die Fahrtreppe bzw. der Fahrsteigs sein soll, wohingegen eine Querschnittsgeometrie der Obergurte und Untergurte unabhängig von der Länge des Fachwerks für alle Fahrtreppen oder Fahrsteige identisch gewählt sein kann. In diesem konkreten Fall ist der generische Bauteilmodell-Datensatz eines Obergurts bzw. Untergurts hinsichtlich der Querschnittsgeometrie vollständig definiert, hinsichtlich der Länge jedoch unterbestimmt.

Um aus dem generischen Bauteilmodell-Datensatz Daten zu erstellen, die das Bauteil bezüglich aller für eine Fertigung der Personentransportanlage wesentlicher charakterisierender Eigenschaften ausreichend charakterisieren, müssen die Daten des generischen Bauteilmodell-Datensatzes daher während des Kommissionierens der Personentransportanlage dahingehend ergänzt werden, dass zunächst unterbestimmte Daten hinsichtlich charakterisierender Eigenschaften des Bauteils konkretisiert und somit ausreichend bestimmt werden. Dies kann dadurch erfolgen, dass während des Kommissionierens Informationen aus den kundenspezifischen Konfigurationsdaten derart entnommen und/oder verarbeitet werden, dass hierdurch die unterbestimmten Daten konkretisiert werden können.

Beim genannten Beispiel kann dies bedeuten, dass beim Kommissionieren einer Fahrtreppe bzw. eines Fahrsteigs die Obergurte und Untergurte von deren Fachwerk kommissioniert werden, indem zugehörige generische Bauteilmodell- Datensätze hinsichtlich der zunächst nicht angegebenen Länge konkretisiert werden. Die Länge der Obergurte und Untergurte wird dabei aus den kundenspezifischen Konfigurationsdaten hergeleitet, das heißt beispielsweise aus Abständen zwischen Auflagestellen, an denen gegenüberliegende Enden des Fachwerks in dem aufnehmenden Bauwerk installiert werden sollen sowie gegebenenfalls aus einem Höhenunterschied zwischen diesen Auflagestellen.

Dadurch, dass der Kommissionierungs-Digitaler-Doppelgänger-Datensatz nicht ausschließlich aus bereits vorab definierten Bauteilmodell-Datensätzen sondern auch aus während des Kommissionierens zu konkretisierenden generischen Bauteilmodell-Datensätzen erstellt wird, kann das gesamte Verfahren des Kommissionierens vereinfacht und/oder für die Planung und Fertigung verschiedener, sich beispielsweise hinsichtlich ihrer geometrischen Abmessungen unterscheidender Personentransportanlagen eingesetzt werden. Das vorgeschlagene Kommissionierungsverfahren kann somit verallgemeinert für die Kommissionierung unterschiedlicher Personentransportanlagen eingesetzt werden. Insbesondere kann das vorgeschlagene Kommissionierungsverfahren weitgehend oder sogar vollständig automatisiert umgesetzt werden.

Gemäß einer Ausführungsform der Erfindung wird beim Erstellen der Kommissionierungsdaten ein virtuelles Abbild der Personentransportanlage unter Einsatz generischer Bauteilmodell-Datensätze der Personentransportanlage und unter Einbeziehung der Kundenspezifikationen erzeugt.

Mit anderen Worten kann es vorteilhaft sein, beim anfänglichen Kommissionieren bzw. Planen der Personentransportanlage unter Berücksichtigung der Kundenspezifikationen ein virtuelles Abbild der Personentransportanlage zu erstellen, in dem die die Personentransportanlage bildenden Bauteile beispielsweise hinsichtlich ihrer Soll-Eigenschaften wiedergegeben sind. Das virtuelle Abbild kann hierbei als eine Art Drahtgerüst oder Drahtgitter entworfen werden. Zu verwendende Bauteile können Strukturen dieses Drahtgerüsts bzw. -gitters bilden. Das Abbild der gesamten Personentransportanlage kann dabei aus vorab definierten Bauteilmodell-Datensätzen sowie situationsspezifisch konkretisierten generischen Bauteilmodell-Datensätzen zusammengesetzt werden.

Gemäß einer Ausführungsform der Erfindung werden beim Erstellen der Kommissionierungsdaten statische und/oder dynamische Simulationen durchgeführt. Der Kommissionierungs-Digitaler-Doppelgänger-Datensatz wird hierbei unter Berücksichtigung von Ergebnissen der Simulationen erstellt.

Mit anderen Worten können zum Erstellen der Kommissionierungsdaten, welche unter Berücksichtigung der Kundenspezifikationen die Grundlage des Kommissionierungs-Digitaler-Doppelgänger-Datensatzes bilden, Simulationen durchgeführt werden, mit denen statische und/oder dynamische Eigenschaften der kommissionierten Personentransportanlage simuliert werden. Simulationen können beispielsweise in einem Computersystem durchgeführt werden.

Statische Simulationen analysieren hierbei beispielsweise ein statisches Zusammenwirken mehrerer zusammengebauter Bauteile. Mithilfe statischer Simulationen kann beispielsweise analysiert werden, ob es beim Zusammenbau von mehreren vordefinierten Bauteilen oder basierend auf generischen Bauteilmodell-Datensätzen fallgerecht spezifizierter Bauteile zu Komplikationen kommen kann, beispielsweise, da jedes der Bauteile mit gewissen Fertigungstoleranzen gefertigt wird, sodass es bei ungünstiger Summierung von Fertigungstoleranzen zu Problemen kommen kann.

Dynamische Simulationen analysieren beispielsweise ein dynamisches Verhalten von Bauteilen beim Betrieb der zusammengebauten Personentransportanlage. Mithilfe dynamischer Simulationen kann beispielsweise analysiert werden, ob bewegliche Bauteile innerhalb einer Personentransportanlage in einer gewünschten Weise verlagert werden können oder ob beispielsweise Kollisionen zwischen relativ zu einander beweglichen Bauteilen drohen.

Gemäß einer Ausführungsform der vorliegenden Erfindung ist die Personentransportanlage eine Fahrtreppe oder ein Fahrsteig und die Bauteile der Personentransportanlage umfassen auch Bauteile eines Fachwerks, welches Obergurte, Untergurte, Steher, Querstreben, Diagonalstreben, Knotenbleche, Auflagewinkel und/oder Fachwerktrennstellen aufweist.

In einer konkreten Ausgestaltung dieser Ausführungsform sind generische Bauteil-Datensätze des Fachwerks hinsichtlich einer Abmessung, insbesondere hinsichtlich einer Länge, des jeweiligen Bauteils unbestimmt. Beim Erstellen des Kommissionierungs-Digitaler-Doppelgänger-Datensatzes werden die Kommissionierungsdaten dann unter Berücksichtigung von zuvor erfassten, kundenspezifischen Konfigurierungsdaten aus den generischen Bauteilmodell-Datensätzen erstellt, indem Daten betreffend die unbestimmte Abmessung unter Berücksichtigung der kundenspezifischen Konfigurierungsdaten berechnet und ergänzt werden.

Mit anderen Worten kann eine Personentransportanlage in Form einer Fahrtreppe oder eines Fahrsteigs aus einer Vielzahl von Bauteilen zusammengesetzt sein, die einerseits ein Fachwerk bilden, welches eine tragende Struktur der Personentransportanlage darstellt, und die andererseits beispielsweise unter anderem eine Fördereinrichtung bilden, welche von dem Fachwerk gehalten wird und mithilfe derer Passagiere entlang eines Verfahrwegs befördert werden können. Insbesondere das Fachwerk wird dabei zwar bei dessen Fertigung aus einer Vielzahl einzelner Bauteile zusammengesetzt, muss aber letztendlich im Bauwerk als Einheit installiert werden und dabei den räumlichen Gegebenheiten im Bauwerk wie auch anderen Kundenspezifikationen genügen.

Um dies erfüllen zu können, kann das Fachwerk zwar teilweise mithilfe standardisierter Bauteile, beispielsweise mithilfe standardisierter Steher, Querstreben, Diagonalstreben, Knotenbleche, etc. aufgebaut werden. Solche standardisierten Bauteile können mithilfe von definierten Bauteilmodell-Datensätzen kommissioniert werden.

Um den fallspezifisch erforderlichen variierenden Abmessungen, insbesondere Längen, des Fachwerks Rechnung tragen zu können, werden jedoch andere Komponenten des Fachwerks nicht mithilfe standardisierter Bauteile aufgebaut werden können. Stattdessen werden solche individuell zu bemaßende Bauteile mithilfe generischer Bauteilmodell-Datensätze kommissioniert. Ein das nicht-standardisierte Bauteil charakterisierender generischer Bauteilmodell-Datensatz wird dabei beim Kommissionieren hinsichtlich seiner zunächst unterbestimmten Daten konkretisiert.

Zum Beispiel kann der generische Bauteilmodell-Datensatz eines Obergurts oder eines Untergurts zunächst hinsichtlich einer Länge unterbestimmt sein und dann während des Kommissionierens hinsichtlich der Länge konkretisiert werden, indem diese Länge basierend auf den Kundenspezifikationen berechnet oder abgeleitet wird.

Gemäß einer Ausführungsform der vorliegenden Erfindung ist die Personentransportanlage ein Aufzug und die Bauteile der Personentransportanlage sind Bauteile einer Tragestruktur, welche Führungsschienen, Wandbefestigungen, einen Antriebsrahmen, Bodenbefestigungen, Querverstrebungen, Längsverstrebungen und/oder Diagonalverstrebungen umfasst.

In einer konkreten Ausgestaltung dieser Ausführungsform sind generische Bauteilmodell-Datensätze der Tragestruktur hinsichtlich einer Abmessung, insbesondere hinsichtlich einer Länge, des Bauteils unbestimmt. Beim Erstellen des Kommissionierungs-Digitaler-Doppelgänger-Datensatzes werden die Kommissionierungsdaten unter Berücksichtigung von zuvor erfassten, kundenspezifischen Konfigurierungsdaten, das heisst Kundenspezifikationen, aus den generischen Bauteilmodell-Datensätzen erstellt, indem Daten betreffend die unbestimmte Abmessung unter Berücksichtigung der kundenspezifischen Konfigurierungsdaten berechnet und ergänzt werden.

Ein Erstellen des Kommissionierungs-Digitaler-Doppelgänger-Datensatzes für den Aufzug kann hierbei in analoger Weise ausgestaltet sein, wie dies hierin schwerpunktmäßig für die Ausgestaltung der Personentransportanlage als Fahrtreppe oder Fahrsteig beschrieben wird.

Gemäß einer Ausführungsform des Fertigungsverfahrens gemäß dem zweiten Aspekt der vorliegenden Erfindung umfasst das Fertigungsverfahren ergänzend ein Erstellen eines Fertigstellungs-Digitaler-Doppelgänger-Datensatzes basierend auf dem Kommissionierungs-Digitaler-Doppelgänger-Datensatz durch Messen von Ist-Daten, welche charakterisierende Eigenschaften von Bauteilen der Personentransportanlage in einer tatsächlichen Konfiguration der Personentransportanlage direkt nach deren Zusammenbau und Installation in einem Bauwerk wiedergeben und ein Ersetzen von Soll-Daten in dem Kommissionierungs-Digitaler-Doppelgänger-Datensatz durch entsprechende Ist-Daten.

Mit anderen Worten kann beim Fertigen einer Personentransportanlage nicht nur ein Kommissionierungs-Digitaler-Doppelgänger-Datensatz erstellt werden, der während eines Fertigungsvorgangs als virtuelles Abbild der zu fertigenden Personentransportanlage genutzt wird, sondern dieser Kommissionierungs-Digitaler-Doppelgänger-Datensatz kann nach dem Fertigstellen der Personentransportanlage weiterverarbeitet werden, indem die ursprünglich darin enthaltenen Soll-Daten durch tatsächlich gemessene Ist-Daten der charakterisierenden Eigenschaften der Bauteile der Personentransportanlage ersetzt werden.

Der sich dabei ergebende Fertigstellungs-Digitaler-Doppelgänger-Datensatz ist somit ein virtuelles Abbild der Personentransportanlage in einer tatsächlichen Konfiguration nach deren Zusammenbau und Installation. Basierend auf diesem Fertigstellungs-Digitaler-Doppelgänger-Datensatz kann z.B. ein Zustand der Personentransportanlage überwacht werden, wie dies in einer parallel zu der vorliegenden Patentanmeldung eingereichten weiteren Patentanmeldung (siehe Angaben weiter unten) genauer beschrieben ist.

Insbesondere kann basierend auf dem Fertigstellungs-Digitaler-Doppelgänger-Datensatz ein aktualisierter Digitaler-Doppelgänger-Datensatz erstellt werden durch Modifizieren des Fertigstellungs-Digitaler-Doppelgänger-Datensatzes während des Betriebs der Personentransportanlage unter Berücksichtigung von Messwerten, welche Änderungen von charakterisierenden Eigenschaften von Bauteilen der Personentransportanlage während deren Betriebs wiedergeben. Solche Messwerte können beispielsweise von in die Personentransportanlage integrierten oder an der Personentransportanlage angeordneten Sensoren bereitgestellt werden. Der aktualisierte Digitaler-Doppelgänger-Datensatz kann während des Betriebs der Personentransportanlage verwendet werden, um einen aktuellen Zustand der Personentransportanlage überwachen zu können. Beispielsweise können Verschleißerscheinungen oder Defekte an der Personentransportanlage aufgrund von Abweichungen des durch den aktualisierten Digitaler-Doppelgänger-Datensatz wiedergegebenen virtuellen Abbilds der Personentransportanlage von vorbekannten Soll-Vorgaben erkannt werden. Darauf basierend können beispielsweise Wartungs- oder Reparaturmaßnahmen geplant oder eingeleitet werden. Vorteilhafterweise können dabei Details solcher Wartungs- oder Reparaturmaßnahmen rein basierend auf einer Analyse von deren virtuellem Abbild geplant werden, ohne dass ein Techniker zuvor die reale Personentransportanlage vor Ort inspizieren müsste. Dies ermöglicht erhebliche Einsparung bei Aufwand und Kosten.

Logischerweise müssen nicht zwingend alle als Soll-Daten vorhandene, charakterisierende Eigenschaften eines Bauteils durch Ist-Daten des Bauteils aktualisiert werden. Demzufolge sind die charakterisierenden Eigenschaften der meisten Bauteile eines Fertigstellungs-Digitaler-Doppelgänger-Datensatzes oder aktualisierten Digitaler-Doppelgänger-Datensatzes durch eine Mischung von Soll-Daten und Ist-Daten charakterisiert.

Ausführungsformen des hierin vorgestellten Verfahrens zum Kommissionieren bzw. zum Fertigen einer zu fertigenden Personentransportanlage können mithilfe einer hierfür speziell konfigurierten Vorrichtung durchgeführt werden. Die Vorrichtung kann einen oder mehrere Computer umfassen. Insbesondere kann die Vorrichtung aus einem Computernetzwerk gebildet sein, welches Daten in Form einer Datenwolke (Cloud) verarbeitet. Die Vorrichtung kann hierfür über einen Speicher verfügen, in dem die Daten des Digitaler-Doppelgänger-Datensatzes gespeichert werden können, beispielsweise in elektronischer oder magnetischer Form. Die Vorrichtung kann ferner über Datenverarbeitungsmöglichkeiten verfügen. Beispielweise kann die Vorrichtung einen Prozessor aufweisen, mithilfe dessen Daten des Digitaler-Doppelgänger-Datensatzes verarbeitet werden können. Die Vorrichtung kann ferner über Schnittstellen verfügen, über die Daten in die Vorrichtung eingegeben und/oder aus der Vorrichtung ausgegeben werden können. Insbesondere kann die Vorrichtung mit Sensoren verbunden sein, die an oder in der Personentransportanlage angeordnet sind und mithilfe derer charakterisierende Eigenschaften von Bauteilen der Personentransportanlage gemessen werden können. Die Vorrichtung kann prinzipiell Teil der Personentransportanlage sein. Vorzugsweise ist die Vorrichtung jedoch nicht in der Personentransportanlage angeordnet, sondern entfernt zu dieser, beispielsweise in einem entfernten Kontrollzentrum, von dem aus der Zustand der Personentransportanlage überwacht werden soll. Die Vorrichtung kann auch räumlich verteilt implementiert sein, beispielsweise wenn Daten über mehrere Computer verteilt in einer Datenwolke verarbeitet werden.

Insbesondere kann die Vorrichtung programmierbar sein, das heißt durch ein geeignet programmiertes Computerprogrammprodukt dazu veranlasst werden, das erfindungsgemäße Verfahren auszuführen oder zu steuern. Das Computerprogrammprodukt kann Anweisungen oder Code enthalten, welche beispielsweise den Prozessor der Vorrichtung dazu veranlassen, Daten des Digitaler-Doppelgänger-Datensatzes abzuspeichern, auszulesen, zu verarbeiten, zu modifizieren, etc. Das Computerprogrammprodukt kann in einer beliebigen Computersprache verfasst sein.

Das Computerprogrammprodukt kann auf einen beliebigen computerlesbaren Medium gespeichert sein, beispielsweise einem Flash-Speicher, einer CD, einer DVD, RAM, ROM, PROM, EPROM, etc. Das Computerprogrammprodukt und/oder die damit zu verarbeitenden Daten können auch auf einem Server oder mehreren Servern gespeichert sein, beispielsweise einer Datenwolke, von wo aus sie über ein Netz, beispielsweise das Internet, heruntergeladen werden können.

Abschließend wird daraufhingewiesen, dass einige der möglichen Merkmale und Vorteile der Erfindung hierin mit Bezug auf unterschiedliche Ausführungsformen sowohl des vorgeschlagenen Verfahrens als auch der entsprechend ausgebildeten Vorrichtung zum Kommissionieren bzw. Fertigen einer Personentransportanlage beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Personentransportanlage in Form einer Fahrtreppe, bezüglich der ein erfindungsgemäßes Verfahren durchgeführt werden kann.
Fig. 2 zeigt ein tragendes Fachwerk für eine Fahrtreppe
Fig. 3 zeigt eine Personentransportanlage in Form eines Aufzugs, bezüglich dem ein erfindungsgemäßes Verfahren durchgeführt werden kann.
Fig. 4 veranschaulicht ein Erstellen eines Digitaler-Doppelgänger-Datensatz am Beispiel eines vereinfacht dargestellten Bauteils.
Fig. 5 zeigt ein Diagramm zur Veranschaulichung von Verfahrensschritten im Rahmen eines erfindungsgemäßen Verfahrens.

Die Figuren sind lediglich schematisch und nicht maßstabsgetreu. Gleiche Bezugszeichen bezeichnen in den verschiedenen Figuren gleiche oder gleichwirkende Merkmale.

Zunächst werden zu kommissionierende bzw. zu fertigende Personentransportanlagen hinsichtlich der darin eingesetzten Bauteile kurz und lediglich sehr schematisch beschrieben.

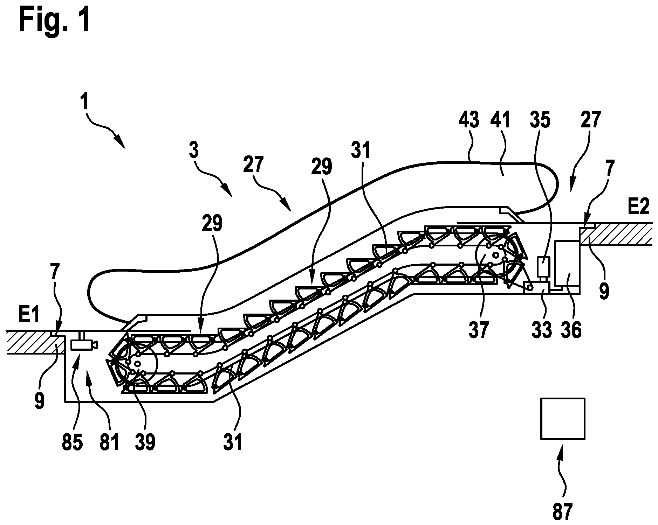

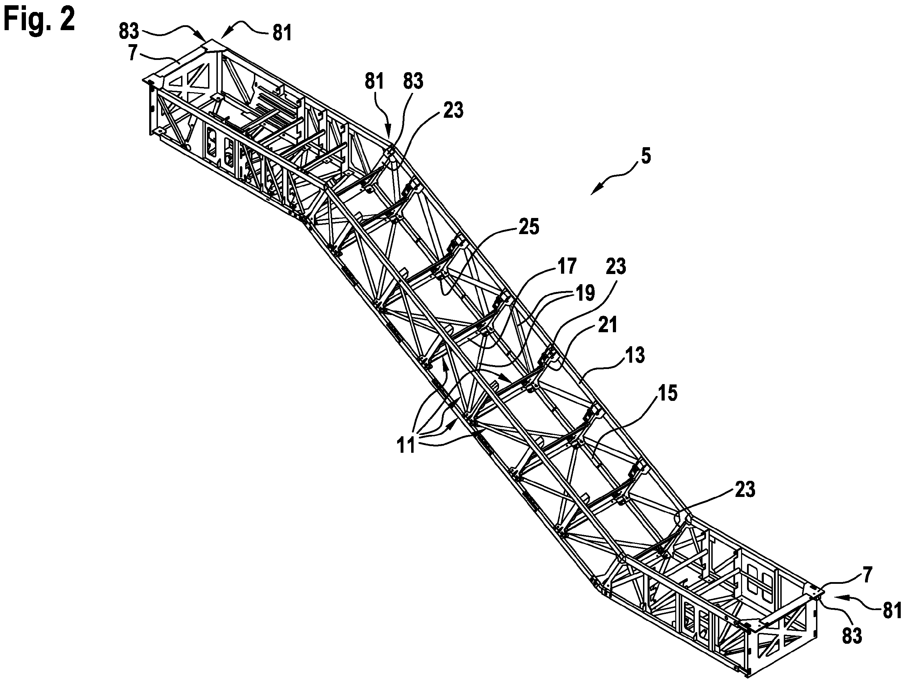

Fig. 1 zeigt eine Personentransportanlage 1 in Form einer Fahrtreppe 3, welche mithilfe des hierin beschriebenen Verfahrens kommissioniert bzw. gefertigt werden kann. Fig. 2 zeigt ein tragendes Fachwerk 5 einer Fahrtreppe 3, welches in Fig. 1 aus Übersichtlichkeitsgründen nicht dargestellt ist.

Die Fahrtreppe 3 verbindet in einem Bauwerk auf unterschiedlichen Höhen gelegene und horizontal voneinander beabstandete Bereiche E1 und E2. Das Fachwerk 5 bildet hierbei eine tragende Struktur und liegt an seinen gegenüberliegenden Enden mit Auflagewinkeln 7 auf Auflagestellen 9 des Bauwerks auf. Das Fachwerk 5 ist aus einer Vielzahl von Bauteilen 11 zusammengesetzt, insbesondere aus Obergurten 13, Untergurten 15, Querstreben 17, Diagonalstreben 19, Stehern 21, Fachwerktrennstellen 23 und Knotenblechen 25. Viele der Bauteile 11 des Fachwerks 5 bestehen zumindest teilweise aus länglichen Metallprofilen. Abmessungen der Bauteile 11 sind dabei so gewählt, dass das Fachwerk 5 einerseits einen Freiraum zwischen gegenüberliegenden Auflagestellen 9 des Bauwerks überspannen kann und andererseits ausreichend stabil ist, um den auf die mit dem Fachwerk 5 gebildete Fahrtreppe 3 wirkenden Kräften standzuhalten.

Die Fahrtreppe 3 umfasst eine Fördereinrichtung 27, welche von dem Fachwerk 5 gehalten wird und mittels welcher Passagiere zwischen den beiden Bereichen E1 und E2 befördert werden können. Die Fördereinrichtung 27 umfasst unter anderem Fahrstufen 29, Förderketten 31, eine Antriebsmaschine 33, eine Betriebsbremse 35, eine Steuerung 36, von der Antriebsmaschine 33 angetriebene Antriebskettenräder 37 und Umlenkkettenräder 39. Die Fahrtreppe 3 umfasst ferner eine Balustrade 41 mit einem daran umlaufend geführten Handlauf 43.

Alternativ kann die Personentransportanlage 1 auch als Fahrsteig (nicht dargestellt) ausgestaltet sein, der hinsichtlich vieler seiner Bauteile 11 ähnlich oder gleich wie eine Fahrtreppe 3 aufgebaut ist.

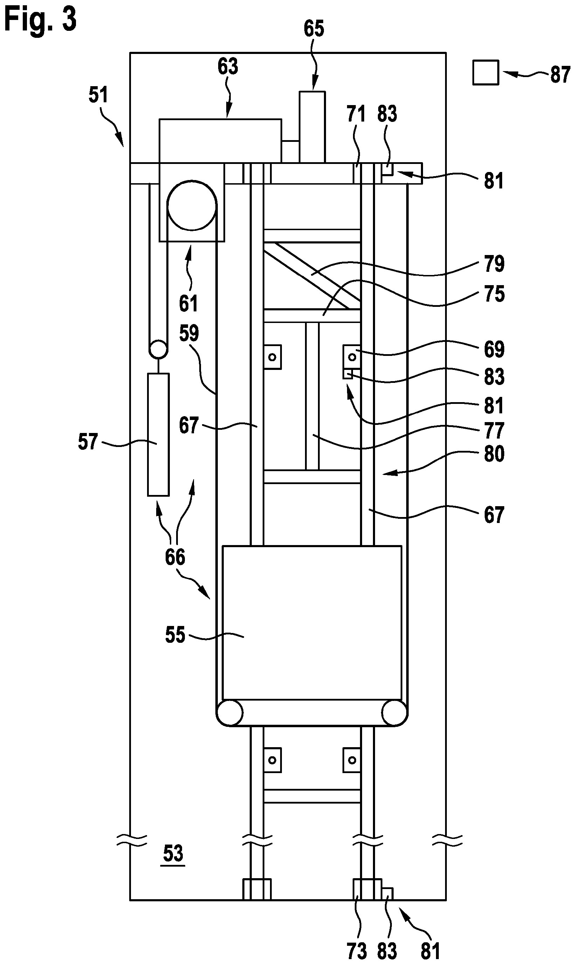

In einer weiteren alternativen Ausgestaltung ist die Personentransportanlage 1 als Aufzug 51 ausgebildet. Ein beispielhafter Aufzug 51 ist in Fig. 3 dargestellt. Der Aufzug 51 verfügt über einen Aufzugschacht 53, in dem eine Fördereinrichtung 66 und eine diese Fördereinrichtung 66 haltende Tragestruktur 80 aufgenommen sind. Eine Aufzugkabine 55 und ein Gegengewicht 57 sind an Tragmitteln 59 in Form von Riemen aufgehängt. Eine Antriebsmaschine 61 sowie eine Bremsvorrichtung 63 treiben die Tragmittel 59 an beziehungsweise bremsen diese bei Bedarf. Eine Steuerung 65 steuert den Betrieb des Aufzugs 51. Die Aufzugkabine 55 und gegebenenfalls auch das Gegengewicht 57 werden bei ihrer Bewegung durch den Aufzugschacht 53 mithilfe von Führungsschienen 67 geführt. Die Führungsschienen 67 sind über Wandbefestigungen 69 und Bodenbefestigungen 73 mit tragenden Strukturen innerhalb des Aufzugschachts 53 verbunden. Ferner sorgen eventuell Querverstrebungen 75, Längsverstrebungen 77 und Diagonalverstrebungen 79 für eine ausreichende mechanische Stabilisierung der Führungsschienen 67. Die Führungsschienen tragen ferner einen Antriebsrahmen 71, an dem die Enden der Tragmittel 59 sowie die Antriebsmaschine 61, die Bremsvorrichtung 63 und die Steuerung 65 befestigt sind.

Der Produktlebenszyklus einer Fahrtreppe 3, eines Fahrsteiges oder eines Aufzuges 51 wird von verschiedenen Softwaresystemen und Datenbanken begleitet. Diese sind im Allgemeinen nicht miteinander in einem Maße verknüpft, dass darin enthaltene Daten durchgängig durch alle Systeme automatisch verfügbar sind. Da eine Produktentwicklung, eine auftragsspezifische Konfigurierung durch den Verkauf und aufgrund dieser Konfigurierung spezifizierte Produktionsunterlagen und Daten bisweilen nicht ausreichend durchgängig miteinander verknüpft sind, fehlt in der Regel eine konsequente Begleitung und Dokumentierung im After-Sales-Bereich. Dies kann beispielsweise dazu führen, dass ein Servicetechniker oft zuerst vor Ort eine Personentransportanlage 1 begutachten muss, um dann entsprechende Maßnahmen durchzuführen, wie z. B. erforderliches Material zu beschaffen, Termine für Wartung und Reparatur festzulegen, ausgebautes Material fachgerecht zu entsorgen, etc.

Das erfindungsgemäße Verfahren sieht vor, dem reellen Produkt einen digitalen Doppelgänger zur Seite zu stellen, und zwar vorzugsweise durchgehend für den gesamten Produktlebenszyklus, das heißt nicht lediglich während des Kommissionierens oder Fertigens der Personentransportanlage 1, sondern auch nach deren Fertigstellung und bei deren anschließendem Betrieb.

Ein den digitalen Doppelgänger darstellender Digitaler-Doppelgänger-Datensatz kann hierbei bereits während bzw. in Vorbereitung des Fertigungsvorgangs basierend auf Kommissionierungsdaten unter Berücksichtigung von Kundenspezifikationen als Kommissionierungs-Digitaler-Doppelgänger-Datensatz, beispielsweise unter Heranziehung von während der Planung eingesetzten CAD-Daten, erstellt werden.

Zum Beispiel kann zuerst mit der Erstellung des digitalen Doppelgängers begonnen werden, indem beispielsweise aus definierten Bauteilmodell-Datensätzen und generischen Bauteilmodell-Datensätzen unter Einbeziehung der Kundenspezifikationen ein digitaler Doppelgänger im Engineering-Stadium (das heißt eine auftragsspezifische, generierte Stückliste, wie sie manchmal auch als EBOM (Engineering Bill of Materials) bezeichnet wird, erzeugt wird.

Die definierten Bauteilmodell-Datensätze sind dabei Datensätze, die Soll-Eigenschaften eines Bauteils derart umfänglich beschreiben, dass hiervon ausgehend das jeweilige Bauteil gefertigt und in der Personentransportanlage montiert werden kann. Beispielsweise beschreibt ein definierter Bauteilmodell-Datensatz ein Bauteil mit einer für dessen Fertigung ausreichenden Präzision hinsichtlich dessen fertigungsrelevanter charakterisierender Eigenschaften wie zum Beispiel Geometrie, Form, Kontur, Gewicht, Material, Oberflächenbeschaffenheiten, Beschichtungen, Schnittstelleninformationen zu angrenzenden Bauteilen und dergleichen mehr enthalten.

In den generischen Bauteilmodell-Datensätzen sind zwar auch Bauteildaten wie deren Abmessungen, Oberflächenstrukturen, andere charakterisierende Eigenschaften, Schnittstelleninformationen zu angrenzenden Bauteilen und dergleichen mehr enthalten. Allerdings beschreibt ein generischer Bauteilmodell-Datensatz ein konkretes Bauteil noch nicht derart umfänglich, dass allein hiervon ausgehend das jeweilige Bauteil gefertigt und in der Personentransportanlage montiert werden kann.

Vielmehr ist in einem generischen Bauteilmodell-Datensatz zumindest eine der charakterisierenden Eigenschaften, die klar definiert sein müssten damit das Bauteil gefertigt werden kann, noch nicht definiert, das heißt, der generische Bauteilmodell-Datensatz ist hinsichtlich dieser Eigenschaft unterbestimmt. Dementsprechend muss der generische Bauteilmodell-Datensatz unter Berücksichtigung der Kundenspezifikationen bezüglich der unterbestimmten Eigenschaft konkretisiert werden.

Am Beispiel eines generischen Bauteilmodell-Datensatzes für einen Obergurt eines Fahrtreppen-Fachwerks 5 kann dies bedeuten, dass dessen Länge anhand der Kundenspezifikationen berechnet wird, damit der Obergurt 13 beziehungsweise das damit gebaute Fachwerk 5 lange genug ist, um einen Zwischenraum zwischen Auflagestellen 9 innerhalb des Gebäudes überspannen zu können. Anschließend werden die diesbezüglich unterbestimmten Daten in dem generischen Bauteilmodell-Datensatz dementsprechend konkretisiert, sodass der konkretisierte generische Bauteilmodell-Datensatz wie ein definiertet Bauteilmodell-Datensatz alle fertigungsrelevanten Daten enthält.

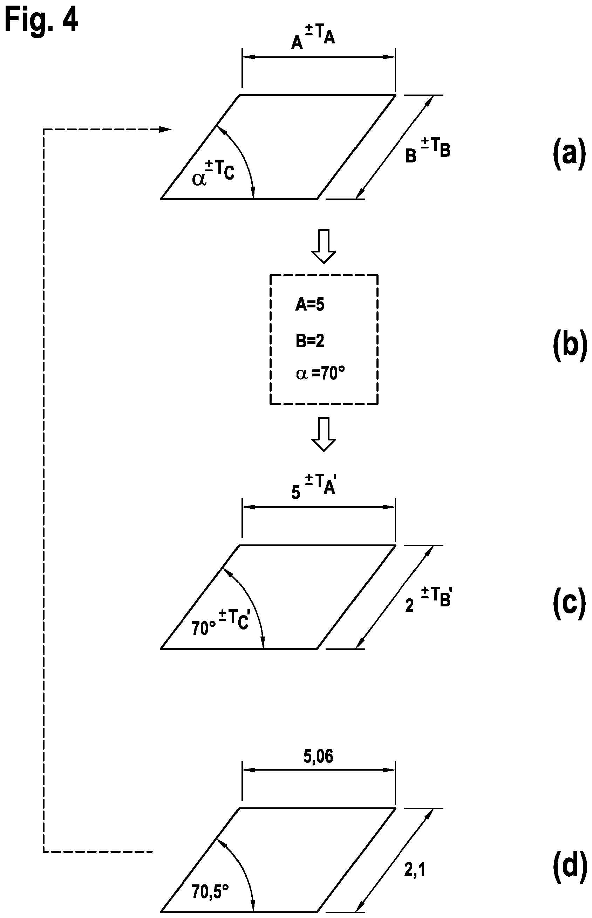

Um mögliche Ausgestaltungen von Verfahrensschritten, welche beim Erstellen eines Digitaler-Doppelgänger-Datensatzes basierend auf generischen Bauteilmodell-Datensätzen durchzuführen sind, zu verdeutlichen, wird dieser Vorgang beispielhaft mit Bezug auf Fig. 4 erläutert. Dabei wird dargestellt, wie für ein sehr einfaches Bauteil in Form eines Parallelogramm-förmigen Blechs ein Digitaler-Doppelgänger-Datensatz erstellt wird.

Zunächst wird im Rahmen einer Forschung und Entwicklung (R & D) ein generischer Bauteilmodell-Datensatz des Bauteils erzeugt (siehe Fig. 4(a)). Dabei werden für das Bauteil Soll-Werte bezüglich zu erreichender charakterisierender Eigenschaften ermittelt. Im dargestellten Beispiel werden Soll-Variablen A, B, α von geometrischen Eigenschaften, das heißt einer Breite, einer Höhe und eines Winkels des Parallelogramms, ermittelt. Ferner wird für jede Soll-Variable ein zugehöriger Toleranzbereich T_{A}, T_{B}, T_{C} festgelegt. Die Blechdicke ist bei allen Ausführungsvarianten dieses Bauteils gleich und gehört somit zu den definierten charakterisierenden Eigenschaften dieses generischen Bauteilmodell-Datensatzes.

Anschließend werden während des Vertriebs der Personentransportanlage Kundenspezifikationen festgelegt (siehe Fig. 4(b)). Basierend auf diesen Kundenspezifikationen wird für jede der Soll-Variablen ein für die konkrete Personentransportanlage passender Soll-Wert ermittelt. Im dargestellten Beispiel wird die Breite zu A = 5, die Höhe zu B = 2 und der Winkel zu α = 70° festgelegt. Durch diese Festlegung wird aus dem generischen Bauteilmodell-Datensatz ein definierter Bauteilmodell-Datensatz des Bauteils; beschrieben durch Kommissionierungsdaten. Dieser definierte Bauteilmodell-Datensatz kann als EBOM dienen.

Anschließend werden die Kommissionierungsdaten des definierten Bauteilmodell-Datensatzes des Bauteils dahingehend konkretisiert, dass die zuvor lediglich basierend auf den Kundenspezifikationen ermittelten Soll-Werte unter Berücksichtigung von Fertigungsspezifikationen zu Fertigungsdaten modifiziert werden. Beispielsweise können hierbei Werkstoffangaben des Fertigungslandes, eines OEM-Herstellers, oder Ähnliches berücksichtigt werden. Hierdurch werden letztendlich die Kommissionierungsdaten des Kommissionierungs-Digitaler-Doppelgänger-Datensatzes in Form einer als Fertigungsdaten ausgewiesenen MBOM ergänzt, welche beim Fertigen des Bauteils herangezogen werden kann und als virtuelles Abbild des zu fertigenden Bauteils dient. Dabei werden auch bei der Ermittlung von Toleranzangaben T_{A}′, T_{B}′, T_{C}′ die tatsächlich bei der Fertigung zu vorherrschenden Fertigungsspezifikationen berücksichtigt.

Abschließend werden zumindest ein Teil der charakterisierenden Eigenschaften des anhand der Fertigungsdaten hergestellten Bauteils vermessen. Dabei werden im dargestellten Fall die Maße des Bauteils in ihrer tatsächlichen Konfiguration (Ist-Werte) nach deren Zusammenbau zu der Personentransportanlage und der Installation der Personentransportanlage gemessen. Da sich die charakterisierenden Eigenschaften des Werkstoffes während der Fertigung nicht ändern, kann beispielsweise lediglich überprüft werden, ob das richtige Material verwendet wurde, ohne aber sämtliche Materialeigenschaften wie die Zugfestigkeit, Scherfestigkeit, Biegewechselfestigkeit, Kerbschlagzähigkeit, das Korrosionsverhalten, das kristalline Gefüge, Legierungsbestandteile und dergleichen mehr zu prüfen. Gegebenenfalls können basierend auf Sensorsignalen auch die Maße des Bauteils in ihrer tatsächlichen Konfiguration während des Betriebs der Personentransportanlage wiederholt gemessen werden. Hierdurch lassen sich z.B. Abweichungen zwischen den Ist-Werten an installierten und gegebenenfalls betriebenen Bauteilen von den zugehörigen Soll-Werten ermitteln. Im dargestellten Beispiel sind solche Abweichungen ΔA = 0.06, ΔB = 0.1 und ΔC = 0.5°.

Die aufgefundenen Abweichungen können beispielsweise statistisch für mehrere Bauteile eines Bauteiltyps analysiert werden. Ergebnisse können beispielsweise bei der Erforschung und Entwicklung eines modifizierten generischen Bauteilmodell-Datensatzes des betroffenen Bauteiltyps berücksichtigt werden.

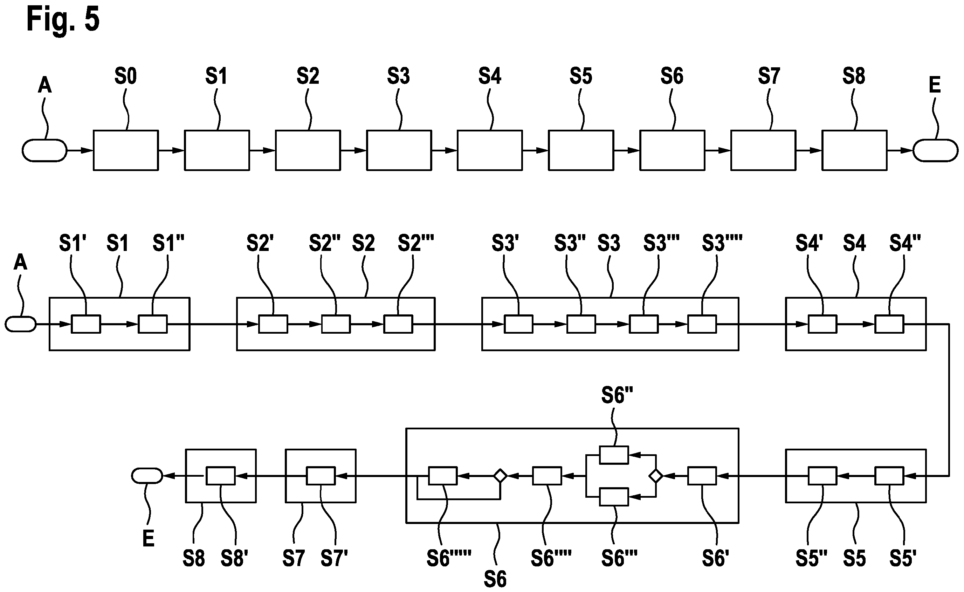

Mit Bezug auf Fig. 5 werden nun Prozessschritte einer beispielhaften Verfahrenssequenz beschrieben, mittels derer Kommissionierungsdaten des Kommissionierungs-Digitaler-Doppelgänger-Datensatzes für die Fertigung einer Fahrtreppe erstellt werden. Fig. 5(a) gibt dabei die Verfahrenssequenz mit ihren Hauptprozessschritten S0 bis S8 wieder. In Fig. 5(b) sind zu jedem der Hauptprozessschritte S1 bis S8 noch zugehörige Unterprozessschritte S1', S1", S2', ... S8' angegeben.

Ausgehend von einem Anfangs- oder Startpunkt A wird in einem ersten Schritt S0 der Kommissionierungsvorgang initialisiert.

Im nachfolgenden Schritt S1 werden 3D-Verkaufsrepräsentationen abgerufen. Dabei werden schrittweise die kundenspezifischen Konfigurierungsdaten zuerst abgefragt (Schritt S1') und anschließend in die 3D-Verkaufsrepräsentationen eingefügt (Schritt S1").

Anschließend wird im Schritt S2 das sogenannte Top-Layout realisiert. Hierzu werden zuerst Eckpunkte des Top-Layouts aufgrund der in der Verkaufsrepräsentation abgefragten Koordinaten im dreidimensionalen Raum festgelegt (Schritt S2'). Dann werden aufgrund eines Bedingungsformelsatzes weitere Eckpunkte festgelegt, wie beispielsweise die bei Fahrtreppen üblichen Eckpunkte zwischen den horizontalen Abschnitten und dem schrägen Mittelteil der Fahrtreppe (Schritt S2ʺ). Zuletzt wird das Top-Layout durch Verbinden der Eckpunkte erzeugt (Schritt S2‴).

Danach wird das Fachwerk-Design erzeugt (Schritt S3). Dabei wird zuerst eine entsprechende Programmoberfläche initialisiert (Schritt S3'), dann unter Einbezug des Top-Layouts ein zweidimensionales Fachwerk-Drahtgerüst generiert (Schritt S3") und schließlich, sofern aufgrund der abgefragten kundenspezifischen Konfigurierungsdaten erforderlich, eine Fachwerk-Sektionsunterteilung durchgeführt (Schritt S3‴) und zuletzt ein dreidimensionales Fachwerk aus definierten und generischen Bauteilmodell-Datensätzen erstellt (Schritt S3ʺʺ).

Als nächstes wird die Bremsenberechnung gestartet (Schritt S4), wobei Bremsleistungsdaten aus den kundenspezifischen Konfigurierungsdaten (maximale Förderleistung, Förderhöhe, Einsatzumfeld, etc.) extrahiert werden (Schritt S4'). Anschließend wird ein Bremsen-Berechnung-Modell laufen gelassen, um zur optimalen Bremsauslegung zu gelangen (Schritt S4").

Als nächstes wird die Antriebsberechnung gestartet (Schritt S5), wobei wiederum Bremsleistungsdaten aus den kundenspezifischen Konfigurierungsdaten (maximale Förderleistung, Förderhöhe, Einsatzumfeld, etc.) extrahiert werden (Schritt S5') und anschließend ein Antriebs-Berechnung-Modell laufen gelassen, um zur optimalen Antriebsauslegung zu gelangen (Schritt S5").

Im Anschluss wird der digitale Doppelgänger beziehungsweise werden die Kommissionierungsdaten erzeugt (Schritt S6). Dabei werden unter Einbeziehung der kundenspezifischen Konfigurierungsdaten aus weiteren generischen Bauteilmodell-Datensätzen (Handlauf, Balustraden, Verkleidungsbleche, etc.) definierte Bauteilmodell-Datensätze dieser Bauteile erzeugt (Schritt S6'). Ferner wird die Anzahl der zu verwendenden definierten Bauteilmodell-Datensätze und die Anzahl der aus generischen Bauteilmodell-Datensätzen erzeugten, definierten Bauteilmodell- Datensätze bestimmt (Schritt S6"). Diese werden anschließend im bereits vorangehend erzeugten dreidimensionalen Fachwerk anhand ihrer Schnittstelleninformationen eingefügt (Schritt S6‴). Des Weiteren werden aufgrund der vorangehend berechneten Daten der Bremsberechnung und Antriebsberechnung aus generischen Bauteilmodell-Datensätzen (beispielsweise aus der erforderlichen Motorenleistung) definierte Bauteilmodell-Datensätze (der richtige Motorentyp) der Bauteile erzeugt (Schritt S6ʺʺ). Diese werden ebenfalls im, bereits durch definierte Bauteilmodell-Datensätze versehene dreidimensionalen Fachwerk anhand ihrer Schnittstelleninformationen eingefügt (Schritt S6ʺ‴).

Die so erzeugten Kommissionierungsdaten des Kommissionierungs-Digitaler-Doppelgänger- Datensatzes werden anschließend überprüft (Schritt S7), wobei diese Überprüfung mittels verschiedener Simulationen wie statische Simulationen, beispielsweise in Form von Toleranzbetrachtungen, und dynamische Simulationen, beispielsweise zur Kollisionsüberprüfung (Schritt S7') erfolgt.

Abschließend werden die Kommissionierungsdaten des Kommissionierungs-Digitaler-Doppelgänger- Datensatz als auftragsspezifische, generierte Stückliste EBOM (Engineering Bill of Material) ausgegeben (Schritt S8, S8'), bevor die Verfahrenssequenz beendet wird (Schritt E).

Des Weiteren können die Kommissionierungsdaten unter Berücksichtigung von Fertigungsspezifikationen zu Fertigungsdaten beziehungsweise zur produktionstauglichen Stückliste (manufacturing BOM; MBOM) mit zugehörenden Produktionsdaten ergänzt werden. Der so ergänzte Kommissionierungs-Digitaler-Doppelgänger-Datensatz beziehungsweise die so geschaffenen Fertigungsdaten umfassen dabei Soll-Daten, die ein virtuelles Abbild der zu fertigenden Personentransportanlage 1 darstellen. Basierend auf diesen Fertigungsdaten kann dann die Personentransportanlage 1 gefertigt werden.

Nach einer Fertigstellung der Personentransportanlage 1 können die im Kommissionierungs-Digitaler-Doppelgänger-Datensatz enthaltenen Soll-Daten durch Ist-Daten, wie sie durch Vermessen der tatsächlichen Konfiguration der gefertigten Personentransportanlage 1 erhalten werden können, ersetzt oder ergänzt werden. Hierdurch entsteht der Fertigstellungs-Digitaler-Doppelgänger-Datensatz.

Bereits dieser Fertigstellungs-Digitaler-Doppelgänger-Datensatz enthält Daten, welche charakterisierende Eigenschaften der in der Personentransportanlage 1 verbauten Bauteile 11 in ihrer tatsächlichen Konfiguration, das heißt nach Fertigstellung der Personentransportanlage und Installation derselben in dem Bauwerk, wiedergeben. Somit kann der Fertigstellungs-Digitaler-Doppelgänger-Datensatz als aktualisierter Digitaler-Doppelgänger-Datensatz bereits zur Überwachung von Eigenschaften der Personentransportanlage 1 verwendet werden. Hierzu kann der Fertigstellungs-Digitaler-Doppelgänger-Datensatz beispielsweise in einer Überwachungsvorrichtung 87, welche in einem entfernt gelegenen Kontrollzentrum angeordnet sein kann, gespeichert und verarbeitet werden.

Beispielsweise können die in dem Fertigstellungs-Digitaler-Doppelgänger-Datensatz enthaltenen Ist-Werte von Bauteileigenschaften, wie sie tatsächlich in der Personentransportanlage 1 vorliegen, mit bei der Kommissionierung angenommenen Soll-Werten verglichen werden. Aus etwaigen erkannten Unterschieden zwischen den Ist-Werten und den Soll-Werten können beispielsweise Rückschlüsse auf zukünftig zu erwartende Eigenschaften der Personentransportanlage 1 gezogen werden. Beispielsweise kann basierend auf solchen Unterschieden prognostiziert werden, wann mit bestimmten Verschleißerscheinungen zu rechnen ist, woraus wiederum abgeschätzt werden kann, wann und/oder in welcher Weise erste Wartungsmaßnahmen notwendig werden dürften. Mit anderen Worten kann bereits basierend auf dem Fertigstellungs-Digitaler-Doppelgänger-Datensatz eine Abschätzung oder Simulation zukünftiger charakterisierender Eigenschaften der Personentransportanlage 1 erfolgen und somit zukünftig durchzuführende Wartungsarbeiten geplant werden.

Um auch während des Betriebs einen digitalen Doppelgänger der Personentransportanlage 1 zur Verfügung stellen zu können, werden zumindest manche der in dem Fertigstellungs-Digitaler-Doppelgänger-Datensatz enthaltenen Daten während des Betriebs der Personentransportanlage von Zeit zu Zeit aktualisiert. Für diesen Zweck können in der Personentransportanlage 1 Sensoren vorgesehen sein, mithilfe derer Messwerte ermittelt werden können, welche Veränderungen von charakterisierenden Eigenschaften von Bauteilen 11 der Personentransportanlage 1 während deren Betrieb wiedergeben. Unter Berücksichtigung dieser Messwerte können die in dem Fertigstellungs-Digitaler-Doppelgänger-Datensatz enthaltenen Daten modifiziert werden. Der hierdurch erzeugte aktualisierte Digitaler-Doppelgänger-Datensatz gibt somit auch ein virtuelles Abbild eines fortlaufend aktualisierten Zustands der Personentransportanlage 1 in ihrer tatsächlichen Konfiguration während des Betriebs wieder.

Unter Verwendung des beim Kommissionieren der Personentransportanlage erstellten Kommissionierungs-Digitaler-Doppelgänger-Datensatz kann somit einerseits die Personentransportanlage in vorteilhafter und vereinfachter Weise gefertigt werden. Andererseits können unter Verwendung des digitalen Doppelgängers der Personentransportanlage beziehungsweise deren aktualisierten Digitaler-Doppelgänger-Datensatzes später sowohl Aussagen über den aktuell vorherrschenden Zustand der Personentransportanlage 1, beispielsweise durch Vergleich mit Sollwerten oder Erwartungswerten, als auch Aussagen über einen zukünftig zu erwartenden Zustand der Personentransportanlage 1, beispielsweise mittels Simulationen oder Extrapolationen basierend auf den Daten des aktualisierten Digitaler-Doppelgänger-Datensatzes, getroffen werden. Hierdurch können wiederum beispielsweise durchzuführende Wartungsarbeiten situationsgerecht und zielgerichtet geplant werden.

Um die aktuell vorherrschenden tatsächlichen charakterisierenden Eigenschaften von Bauteilen 11 in der Personentransportanlage 1 messen zu können, können in der Personentransportanlage 1 verschiedene Sensoren 81 vorgesehen sein, mithilfe derer bestimmte charakterisierende Parameter überwacht werden können, die einen Rückschluss auf Veränderungen bei den charakterisierenden Eigenschaften der Bauteile 11 der Personentransportanlage 1 ermöglichen. Generell ist eine Vielzahl unterschiedlichster Sensoren 81 für diesen Zweck einsetzbar. Lediglich beispielhaft sind in dem Aufzug 51 Kraftsensoren 83 dargestellt, die auf die verschiedenen Wandbefestigungen 69 und Bodenbefestigungen 73 sowie auf den Antriebsrahmen 71 wirkende Kräfte messen können, wodurch sich Rückschlüsse auf die Führungsschienen 61 einwirkende Kräfte und somit auf beispielsweise etwaige mechanische Verspannungen ziehen lassen. Für eine Personentransportanlage 1 in Form einer Fahrtreppe 3 ist lediglich beispielhaft ein Kamerasystem 85 dargestellt, mithilfe dessen der Zustand beispielsweise von Fahrstufen 29 oder der Förderketten 31 auf etwaig auftretenden Verschleiß hin überwacht werden kann. Ergänzend können beispielsweise auch in dem Fachwerk 5 Kraftsensoren 83 ähnlich wie bei dem Aufzug 51 vorgesehen sein. Die Sensoren können ihre Signale beispielsweise drahtgebunden oder über ein Funknetzwerk an die Überwachungsvorrichtung 87 übermitteln.

Nachfolgend soll das Erstellen eines Kommissionierungs-Digitaler-Doppelgänger-Datensatz konkret für ein Beispiel beschrieben werden, bei dem eine Personentransportanlage 1 in Form einer Fahrtreppe 3 geplant und dann gefertigt werden soll.

Als Beispiel des Zusammenwirkens von generischen Bauteilmodell-Datensätzen und der Kundenspezifikation kann die Erzeugung einer auftragsspezifisch generierten Stückliste (EBOM) eines Fachwerkes 5 für die Fahrtreppe 3 herangezogen werden. Der Kunde definiert in seiner Kundenspezifikation die für die Auslegung des Fachwerkes 5 relevanten Angaben, wie z.B. ein Einsatzgebiet (Kaufhaus, öffentliches Bauwerk wie Bahnhof, U-Bahn etc.), eine Förderhöhe, eine Stufenbreite (und damit eine Förderkapazität), eine Länge (wobei aus der Länge und der Förderhöhe ein Winkel des schrägen Bereichs zwischen den Zutrittsbereichen ermittelt wird) und den Balustradentyp (z.B. Glasbalustrade, Balustrade für Verkehrstreppen). Als generische Bauteilmodell-Datensätze sind die einzelnen Bauteile 11 des Fachwerkes 5 wie Obergurte 13, Untergurte 15, Querstreben 17, Auflagewinkel 7, Fachwerktrennstellen 23, etc. sowie definierte Bauteilmodell-Datensätze wie Steher 21, Diagonalstreben 19, Knotenbleche 25, etc. vorhanden, wobei beispielsweise die Länge der Obergurte 13 und Untergurte 15, die Länge der Querstreben 17 sowie die Anzahl der Steher 21 von den Kundenspezifikationen abhängig sind. Entsprechend den eingegebenen Kundenspezifikationen werden die einzelnen Bauteile 11 des Fachwerks 5 mit ihren spezifischen Dimensionen aus den generischen und definierten Bauteilmodell-Datensätzen erzeugt. Die Auslegung erfolgt zum Beispiel so, dass mittels der Kundenspezifikationen "Förderhöhe", "horizontaler Abstand der Auflagewinkel", "Stufenbreite" und/oder "Förderkapazität" ein sogenanntes virtuelles Drahtgerüst des Fachwerks 5 erstellt wird. Die einzelnen Bauteile 11 werden nun anhand dieses virtuellen Drahtgerüsts ausgelegt, insbesondere hinsichtlich ihrer Dimensionen, insbesondere ihrer Längen, und deren Anzahl bestimmt. Aus den Kundenspezifikationen ist auch zu entnehmen, wie viele Fachwerktrennstellen 23 vorzunehmen sind, damit die Fahrtreppe 3 beispielsweise in Segmenten ins Gebäude gebracht werden kann. Aufgrund der Fachwerktrennstellen 23 sind eventuell andere Teile erforderlich und die Obergurte 13 und Untergurte 15 müssen in der Regel mehrteilig sein.

In analoger Weise kann eine EBOM auch für einen Aufzug 51 erstellt werden, indem eine Soll-Konfiguration für eine Fördereinrichtung 66 und eine Tragestruktur 80 unter Berücksichtigung von Kundenspezifikationen ermittelt wird. Dabei können beispielsweise eine Größe der Aufzugkabine 55, ein Gewicht des Gegengewichts 57, eine Auslegung der Tragmittel 59, der Antriebsmaschine 61 und der Bremsvorrichtung 63 sowie der Steuerung 65 geeignet gewählt werden. Ferner können Abmessungen und andere charakterisierende Eigenschaften der Führungsschienen 67, der Wandbefestigungen 69, des Antriebsrahmens 71, der Bodenbefestigungen 73, der Querverstrebungen 75, der Längsverstrebungen 77, der Diagonalverstrebungen 79 sowie von nicht dargestellten Schachttüren und Kabinentüren geeignet gewählt werden. Zugehörige Daten können in dem Kommissions-Digitaler-Doppelgänger-Datensatz gespeichert werden.

Als Beispiel für die aus der EBOM generierte MBOM kann wiederum das Fachwerk 5 dienen. Produktionsspezifische Regeln betreffen beispielsweise die am Produktionsstandort verfügbaren Materialqualitäten oder die je nach Produktionsstandort vorhandene Fertigungsgüte der Produktionsmittel. Ein weiterer Einflussfaktor kann zudem das Produktionslayout der Fabrikationsstätte sein, das gegebenenfalls nicht alle wünschenswerten Produktionsabläufe zulässt. Entsprechend werden charakterisierende Eigenschaften der Bauteilmodell-Datensätze der Bauteile modifiziert, Durchlaufpläne hinzugefügt und dergleichen mehr.

Die Fertigung der Personentransportanlage erfolgt auf Basis der Fertigungsdaten (MBOM), wobei mit zunehmendem Fertigungsfortschritt die Fertigungsdaten durch die physischen Daten, das heißt vom physischen Produkt abgenommene Ist-Werte, ersetzt werden. Hierbei werden beispielsweise die reellen Bauteilabmessungen sowie die montagerelevanten Daten wie unter anderem Anzugsdrehmomente von Schraubenverbindungen, Einsatzstellen von Schmierstoffen und dergleichen mehr erfasst und auf den digitalen Doppelgänger beziehungsweise Kommissionierungs-Digitaler-Doppelgänger-Datensatz übertragen und dieser dadurch zum Fertigstellungs-Digitaler-Doppelgänger-Datensatz mutiert. Bei der Auslieferung der Personentransportanlage existiert parallel zu dieser ein digitaler Doppelgänger beziehungsweise Fertigstellungs-Digitaler-Doppelgänger-Datensatz, der im Idealfall haargenau dem physischen Produkt entspricht.

Beim Einbau der Personentransportanlage in das Bauwerk und bei der Inbetriebnahme können weitere Daten wie beispielsweise die Betriebsdaten und von Sensoren übermittelte Messdaten im digitalen Doppelgänger nachgeführt werden, so dass der Fertigstellungs-Digitaler-Doppelgänger-Datensatz zum aktualisierten Digitaler-Doppelgänger-Datensatz mutiert wird. Dies geschieht kontinuierlich oder periodisch auch nach der Inbetriebnahme.

Periodische Abfragen am digitalen Doppelgänger wie beispielsweise verschleißbedingte, geometrische Veränderungen können mittels Kollisionssimulationen bewertet und Wartungsarbeiten geplant werden. Wartungsinstruktionen für das Wartungspersonal können ebenfalls unter Zuhilfenahme des digitalen Doppelgängers generiert werden. Konsequenterweise werden beim wartungsbedingten Austausch von Bauteilen auch deren definierte Bauteilmodell-Datensätze im digitalen Doppelgänger dieser Personentransportanlage mit den, dem neu eingebauten physischen Bauteil entsprechenden Ist-Daten nachgeführt. Schlussendlich können bereits vor dem Abbruch der Anlage deren einzelne Bauteile bewertet und umweltgerecht einer Weiterverwendung, Aufbereitung oder Entsorgung zugeführt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Kommissionieren einer zu fertigenden Personentransportanlage (1), umfassend:
Erstellen eines Kommissionierungs-Digitaler-Doppelgänger-Datensatzes der Personentransportanlage (1) mit Soll-Daten, welche charakterisierende Eigenschaften von Bauteilen (11) der Personentransportanlage (1) in einer Soll-Konfiguration wiedergeben, **dadurch gekennzeichnet dass**, das Erstellen des Kommissionierungs-Digitaler-Doppelgänger-Datensatzes zunächst ein Erstellen von Kommissionierungsdaten unter Berücksichtigung von zuvor erfassten, kundenspezifischen Konfigurierungsdaten aus generischen Bauteilmodell-Datensätzen und definierten Bauteilmodell-Datensätzen (11) umfasst und anschließend ein Erstellen von eine Soll-Konfiguration angebenden Fertigungsdaten durch Ergänzen der Kommissionierungsdaten mit produktionsspezifischen Daten umfasst,
wobei ein definierter Bauteilmodell-Datensatz (11) eine Konfiguration eines einzelnen Bauteils bezüglich aller für seine Fertigung wesentlichen charakterisierenden Eigenschaften wiedergibt, und
wobei ein generischer Bauteilmodell-Datensatz (11) eine Konfiguration mehrerer verschiedener Bauteile (11) zulässt und mehrere für seine Fertigung wesentlichen charakterisierenden Eigenschaften so wiedergibt, dass ein generischer Bauteilmodell-Datensatz (11) durch Berücksichtigen der zuvor erfassten kundenspezifischen Konfigurationsdaten um Daten derart ergänzt werden kann, dass dieser dadurch in einen einzelnen, definierten Bauteilmodell-Datensatz (11) überführt wird, der bezüglich aller für eine Fertigung der Personentransportanlage (1) wesentlichen charakterisierenden Eigenschaften wiedergibt.

2. Verfahren nach Anspruch 1, wobei beim Erstellen der Kommissionierungsdaten ein virtuelles Abbild der Personentransportanlage (11) unter Einsatz generischer Bauteilmodell-Datensätze der Personentransportanlage (1) und unter Einbeziehung der Kundenspezifikationen erzeugt wird.

3. Verfahren nach einem der vorangehenden Ansprüche, wobei beim Erstellen der Kommissionierungsdaten Simulationen aus einer Gruppe umfassend statische und dynamische Simulationen durchgeführt werden und wobei der Kommissionierungs-Digitaler-Doppelgänger-Datensatz unter Berücksichtigung von Ergebnissen der Simulationen erstellt wird.

4. Verfahren nach einem der vorangehenden Ansprüche, wobei die Personentransportanlage (1) ausgewählt ist aus einer Gruppe umfassend Fahrtreppen (3) und Fahrsteige und wobei die Bauteilmodell-Datensätze (11) der Personentransportanlage Bauteilmodell-Datensätze (11) eines Fachwerks (5) umfassend mehrere Bauteilmodell-Datensätze (11) ausgewählt aus einer Gruppe umfassend Obergurt- Bauteilmodell-Datensätze (13), Untergurt-Bauteilmodell-Datensätze (15), Steher-Bauteilmodell-Datensätze (21), Querstreben-Bauteilmodell-Datensätze (17), Diagonalstreben-Bauteilmodell-Datensätze (19), Knotenblech- Bauteilmodell-Datensätze (25), Auflagewinkel- Bauteilmodell-Datensätze (7) und Fachwerktrennstellen- Bauteilmodell-Datensätze (23) umfassen.

5. Verfahren nach Anspruch 4, wobei generische Bauteilmodell-Datensätze (11) des Fachwerks (5) hinsichtlich einer Abmessung, insbesondere hinsichtlich einer Länge des Bauteilmodell-Datensatzes (11) unbestimmt sind und wobei beim Erstellen des Kommissionierungs-Digitaler-Doppelgänger-Datensatzes die Kommissionierungsdaten unter Berücksichtigung von zuvor erfassten, kundenspezifischen Konfigurierungsdaten aus den generischen Bauteilmodell-Datensätzen erstellt werden, indem Daten betreffend die unbestimmte Abmessung unter Berücksichtigung der kundenspezifischen Konfigurierungsdaten berechnet und ergänzt werden.

6. Verfahren nach einem der vorangehenden Ansprüche 1 bis 3, wobei die Personentransportanlage (1) ein Aufzug (51) ist und wobei die Bauteilmodell-Datensätze (11) der Personentransportanlage (1) Bauteilmodell-Datensätze (11) einer Tragestruktur (80) umfassend mehrere Bauteilmodell-Datensätze (11) ausgewählt aus einer Gruppe umfassend Führungsschienen- Bauteilmodell-Datensätze (67), Wandbefestigung-Bauteilmodell-Datensätze (69), Antriebsrahmen- Bauteilmodell-Datensätze (71), Bodenbefestigung- Bauteilmodell-Datensätze (73), Querverstrebung- Bauteilmodell-Datensätze (75), Längsverstrebung- Bauteilmodell-Datensätze (77) und Diagonalverstrebung- Bauteilmodell-Datensätze (79) umfassen.

7. Verfahren nach einem der vorangehenden Ansprüche 1 bis 3 und 6, wobei generische Bauteilmodell-Datensätze (11) der Tragestruktur (80) hinsichtlich einer Abmessung, insbesondere hinsichtlich einer Länge, des Bauteilmodell-Datensatzes (11) unbestimmt sind und wobei beim Erstellen des Kommissionierungs-Digitaler-Doppelgänger-Datensatzes die Kommissionierungsdaten unter Berücksichtigung von zuvor erfassten, kundenspezifischen Konfigurierungsdaten aus den generischen Bauteilmodell-Datensätzen erstellt werden, indem Daten betreffend die unbestimmte Abmessung unter Berücksichtigung der kundenspezifischen Konfigurierungsdaten berechnet und ergänzt werden.

8. Verfahren zum Fertigen einer Personentransportanlage (1), umfassend:
Kommissionieren der Personentransportanlage (1) mittels eines Verfahrens gemäß einem der vorangehenden Ansprüche; und
Fertigen der Personentransportanlage (1) mit charakterisierenden Eigenschaften, wie sie in dem Kommissionierungs-Digitaler-Doppelgänger-Datensatz angegeben sind.

9. Verfahren nach Anspruch 8, ferner umfassend ein Erstellen eines Fertigstellungs-Digitaler-Doppelgänger-Datensatzes basierend auf dem Kommissionierungs-Digitaler-Doppelgänger-Datensatz durch Messen von Ist-Daten, welche charakterisierende Eigenschaften von Bauteilen (11) der Personentransportanlage (1) in einer tatsächlichen Konfiguration der Personentransportanlage (1) direkt nach deren Zusammenbau und Installation in einem Bauwerk wiedergeben und Ersetzen von Soll-Daten in dem Kommissionierungs-Digitaler-Doppelgänger-Datensatz durch entsprechende Ist-Daten.

10. Vorrichtung zum Kommissionieren einer Personentransportanlage (1), wobei die Vorrichtung dazu konfiguriert ist, einen Kommissionierungs-Digitaler-Doppelgänger-Datensatz der Personentransportanlage (1) mit Soll-Daten, welche charakterisierende Eigenschaften von Bauteilen (11) der Personentransportanlage (1) in einer Soll-Konfiguration wiedergeben, zu erstellen, **dadurch gekennzeichnet, dass** zunächst Kommissionierungsdaten unter Berücksichtigung von zuvor erfassten, kundenspezifischen Konfigurierungsdaten aus generischen Bauteilmodell-Datensätzen (11) und definierten Bauteilmodell-Datensätzen (11) erstellt werden und anschließend Fertigungsdaten, basierend auf denen die Personentransportanlage (1) zu fertigen ist, durch Ergänzen der Kommissionierungsdaten mit produktionsspezifischen Daten erstellt werden, wobei ein definierter Bauteilmodell-Datensatz (11) eine Konfiguration eines einzelnen Bauteils bezüglich aller für seine Fertigung wesentlichen charakterisierenden Eigenschaften wiedergibt, und
wobei ein generischer Bauteilmodell-Datensatz (11) eine Konfiguration mehrerer verschiedener Bauteile (11) zulässt und mehrere für seine Fertigung wesentlichen charakterisierenden Eigenschaften so wiedergibt, dass ein generischer Bauteilmodell-Datensatz (11) durch Berücksichtigen der zuvor erfassten kundenspezifischen Konfigurationsdaten um Daten derart ergänzt werden kann, dass dieser dadurch in einen einzelnen, definierten Bauteilmodell-Datensatz (11) überführt wird, der bezüglich aller für eine Fertigung der Personentransportanlage (1) wesentlichen charakterisierenden Eigenschaften wiedergibt.

11. Computerprogrammprodukt, umfassend maschinenlesbare Programmanweisungen, welche bei Ausführung auf einer programmierbaren Vorrichtung die Vorrichtung zum Durchführen oder Steuern eines Verfahrens gemäß einem der Ansprüche 1 bis 9 veranlassen.

12. Computerlesbares Medium mit einem darauf gespeicherten Computerprogrammprodukt gemäß Anspruch 11.

## Claims

1. A method for commissioning a passenger transport system (1) to be manufactured, comprising:
creating a commissioning digital double dataset of the passenger transport system (1) with target data which depicts characterizing properties of components (11) of the passenger transport system (1) in a target configuration,
**characterized in that** the creation of the commissioning digital double dataset comprising, firstly, the creation of commissioning data from generic component model datasets and defined component model datasets (11) by taking into consideration previously collected customer-specific configuration data, and subsequently, the creation of manufacturing data that specify the target configuration by supplementing the commissioning data with production-specific data,
wherein a defined component model dataset (11) depicting a configuration of an individual component with respect to all the characterizing properties that are essential for its manufacture, and
wherein a generic component model dataset (11) permitting a configuration of several different components (11) and depicting several characterizing properties that are essential for its manufacture so that a generic component model dataset (11) can be supplemented by taking into consideration the previously collected customer-specific configuration data in such a way that this is converted into a single, defined component model dataset (11) which depicts all essential characterizing properties for manufacturing the passenger transport system (1).

2. The method according to claim 1, wherein, when the commissioning data is created, a virtual image of the passenger transport system (11) is generated using generic component model datasets of the passenger transport system (1) and including the customer specifications.

3. The method according to any of the preceding claims, wherein simulations from a group comprising static and dynamic simulations are carried out when the commissioning data is created, and wherein the commissioning digital double dataset is created taking the results of the simulations into consideration.

4. The method according to one of the preceding claims, wherein the passenger transport system (1) is selected from a group comprising escalators (3) and moving walkways, and wherein the component model datasets (11) of the passenger transport system comprise component model datasets (11) of a framework (5) comprising several component model datasets (11) selected from a group comprising upper chord component model datasets (13), lower chord component model datasets (15), upright component model datasets (21), cross strut component model datasets (17), diagonal strut component model datasets (19), junction plate component model datasets (25), supporting angle bracket component model datasets (7) and framework separation point component model datasets (23).

5. The method according to claim 4, wherein generic component model datasets (11) of the framework (5) are undetermined with regard to a dimension, in particular with regard to a length of the component model dataset (11), and wherein the commissioning data are created when the commissioning digital double dataset is created taking into consideration previously collected, customer-specific configuration data from the generic component model datasets, by calculating and supplementing data relating to the undetermined dimension, taking the customer-specific configuration data into consideration.

6. The method according to one of the preceding claims 1 to 3, wherein the passenger transport system (1) is an elevator (51) and wherein the component model datasets (11) of the passenger transport system (1) comprise component model datasets (11) of a support structure (80) comprising several component model datasets (11) selected from a group comprising guide rail component model datasets (67), wall mounting component model datasets (69), drive frame component model datasets (71), floor mounting component model datasets (73), cross strut component model datasets (75), longitudinal strut component model datasets (77) and diagonal strut component model datasets (79).

7. The method according to one of the preceding claims 1 to 3 and 6, wherein generic component model datasets (11) of the support structure (80) with regard to a dimension, in particular with regard to a length, of the component model dataset (11) are undetermined and wherein, when the commissioning digital double dataset is created, the commissioning data are created taking into consideration previously collected, customer-specific configuration data from the generic component model datasets by calculating and supplementing data relating to the undetermined dimension, taking the customer-specific configuration data into consideration.

8. The method for manufacturing a passenger transport system (1), comprising:
commissioning the passenger transport system (1) by means of a method according to one of the preceding claims; and
manufacturing the passenger transport system (1) with characterizing properties as specified in the commissioning digital double dataset.

9. The method according to claim 8, further comprising creating a completion digital double dataset based on the commissioning digital double dataset by measuring actual data, which depicts characterizing properties of components (11) of the passenger transportation system (1) in an actual configuration of the passenger transport system (1) immediately after assembly and installation thereof in a building and a replacement of target data in the commissioning digital double dataset by corresponding actual data.

10. A device for commissioning a passenger transport system (1), wherein the device is configured to create a commissioning digital double dataset of the passenger transport system (1) with target data, which depicts characterizing properties of components (11) of the passenger transport system (1) in a target configuration, **characterized in that** firstly commissioning data are created taking into consideration previously collected, customer-specific configuration data from generic component model datasets (11) and defined component model datasets (11), and then manufacturing data, based on which the passenger transport system (1) is to be manufactured, are created by supplementing the commissioning data with production-specific data, wherein a defined component model dataset (11) depicts a configuration of an individual component with respect to all the characterizing properties that are essential for its manufacture, and
wherein a generic component model dataset (11) allows a configuration of several different components (11) and depicts several characterizing properties that are essential for its manufacture in such a way that a generic component model dataset (11) can be supplemented by taking into consideration the previously collected customer-specific configuration data by data in such a way that it is converted into a single, defined component model dataset (11), which depicts all the characterizing properties that are essential for the manufacture of the passenger transport system (1).

11. A computer program product, comprising machine-readable program instructions which, when executed on a programmable device, cause the device to carry out or control a method according to one of claims 1 to 9.

12. A computer-readable medium that has a computer program product according to claim 11 stored thereon.

## Revendications

1. Procédé de mise en service d'un système de transport de passagers (1) à fabriquer, comprenant :
la création d'un ensemble de données de double numérique de mise en service du système de transport de passagers (1) à l'aide de données cibles qui reproduisent, dans une configuration cible, les propriétés caractéristiques de composants (11) du système de transport de passagers (1),
dans lequel la création de l'ensemble de données de double numérique de mise en service comprend tout d'abord la création de données de mise en service en prenant en compte les données de configuration spécifiques au client enregistrées précédemment à partir d'ensembles de données de modèle de composant génériques et d'ensembles de données de modèle de composant définis (11), puis la création de données de fabrication indiquant une configuration cible en complétant les données de mise en service par des données spécifiques à la production,
dans lequel un ensemble de données de modèle de composant défini (11) reproduit une configuration d'un composant individuel en ce qui concerne toutes les propriétés caractéristiques essentielles pour sa fabrication, et
dans lequel un ensemble de données de modèle de composant générique (11) permet une configuration de plusieurs composants différents (11) et reproduit plusieurs propriétés caractéristiques essentielles pour sa fabrication de telle sorte qu'un ensemble de données de modèle de composant générique (11) peut être complété par des données en tenant compte des données de configuration spécifiques au client enregistrées précédemment par son transfert dans un seul ensemble de données de modèle de composant défini (11), lequel reproduit toutes les propriétés caractéristiques essentielles pour la fabrication du système de transport de passagers (1).

2. Procédé selon la revendication 1, dans lequel, lors de la création des données de mise en service, une représentation virtuelle du système de transport de passagers (11) est générée à l'aide d'ensembles de données de modèle de composant génériques du système de transport de passagers (1) et en tenant compte des spécifications du client.

3. Procédé selon l'une des revendications précédentes, dans lequel, lors de la création des données de mise en service, des simulations provenant d'un groupe comprenant des simulations statiques et dynamiques sont effectuées, et dans lequel l'ensemble de données de double numérique de mise en service est créé en prenant en compte les résultats des simulations.

4. Procédé selon l'une des revendications précédentes, dans lequel le système de transport de passagers (1) est sélectionné dans un groupe comprenant des escaliers roulants (3) et des trottoirs roulants et dans lequel les ensembles de données de modèle de composant (11) du système de transport de passagers comprennent des ensembles de données de modèle de composant (11) d'un cadre (5) comprenant plusieurs ensembles de données de modèle de composant (11) sélectionnés dans un groupe comprenant des ensembles de données de modèle de composant de corde supérieure (13), des ensembles de données de modèle de composant de corde inférieure (15), des ensembles de données de modèle de composant droit (21), des ensembles de données de modèle de composant de barre transversale (17), des ensembles de données de modèle de composant de barre diagonale (19), des ensembles de données de modèle de composant de gousset d'assemblage (25), des ensembles de données de modèle de composant d'angle d'appui (7) et des ensembles de données de modèle de composant de point de séparation de cadre (23).

5. Procédé selon la revendication 4, dans lequel les ensembles de données de modèle de composant génériques (11) du cadre (5) sont indéfinis en ce qui concerne une dimension, en particulier en ce qui concerne une longueur de l'ensemble de données de modèle de composant (11), et les données de mise en service, lors de la création de l'ensemble de données de double numérique de mise en service, étant créées en prenant en compte les données de configuration spécifiques au client enregistrées précédemment à partir des ensembles de données de modèle de composant génériques par le calcul et la complétion de données relatives à la dimension indéfinie en prenant en compte les données de configuration spécifiques au client.

6. Procédé selon l'une des revendications précédentes 1 à 3, dans lequel le système de transport de passagers (1) est un ascenseur (51) et dans lequel les ensembles de données de modèle de composant (11) du système de transport de passagers (1) comprennent des ensembles de données de modèle de composant (11) d'une structure de support (80) comprenant plusieurs ensembles de données de modèle de composant (11) sélectionnés dans un groupe comprenant des ensembles de données de modèle de composant de rail de guidage (67), des ensembles de données de modèle de composant de fixation murale (69), des ensembles de données de modèle de composant de cadre d'entraînement (71), des ensembles de données de modèle de composant de fixation de sol (73), des ensembles de données de modèle de composant de renforcement transversal (75), des ensembles de données de modèle de composant de renforcement longitudinal (77) et des ensembles de données de modèle de composant de renforcement diagonal (79).

7. Procédé selon l'une des revendications précédentes 1 à 3 et 6, dans lequel les ensembles de données de modèle de composant génériques (11) de la structure de support (80) sont indéterminés en ce qui concerne une dimension, en particulier en ce qui concerne une longueur, de l'ensemble de données de modèle de composant (11) et les données de mise en service, lors de la création de l'ensemble de données de double numérique de mise en service, étant créées en prenant en compte les données de configuration spécifiques au client enregistrées précédemment à partir des ensembles de données de modèle de composant génériques par le calcul et la complétion de données relatives à la dimension indéfinie en prenant en compte les données de configuration spécifiques au client.

8. Procédé de fabrication d'un système de transport de passagers (1), comprenant :
la mise en service du système de transport de passagers (1) au moyen d'un procédé conformément à l'une des revendications précédentes ; et
la fabrication du système de transport de passagers (1) comportant des propriétés caractéristiques telles que spécifiées dans l'ensemble de données de double numérique de mise en service.

9. Procédé selon la revendication 8, comprenant en outre la création d'un ensemble de données de double numérique de fabrication basé sur l'ensemble de données de double numérique de mise en service en mesurant des données réelles, lesquelles reproduisent des propriétés caractéristiques de composants (11) du système de transport de passagers (1) dans une configuration réelle du système de transport de passagers (1) immédiatement après son montage et son installation dans un bâtiment et le remplacement de données cibles dans l'ensemble de données de double numérique de mise en service par des données réelles correspondantes.

10. Dispositif de mise en service d'un système de transport de passagers (1), le dispositif étant configuré pour créer un ensemble de données de double numérique de mise en service du système de transport de passagers (1) avec des données cibles, lesquelles reproduisent des propriétés caractéristiques de composants (11) du système de transport de passagers (1) dans une configuration cible, **caractérisé en ce que** tout d'abord, des données de mise en service sont créées en prenant en compte des données de configuration spécifiques au client enregistrées précédemment à partir d'ensembles de données de modèle de composant génériques (11) et d'ensembles de données de modèle de composant définis (11) puis des données de fabrication, sur la base desquelles le système de transport de passagers (1) doit être fabriqué, sont créées en complétant des données de mise en service avec des données spécifiques à la production, un ensemble de données de modèle de composant défini (11) reproduisant une configuration d'un composant individuel par rapport à toutes les propriétés caractéristiques essentielles à sa fabrication, et
un ensemble de données de modèle de composant générique (11) permettant une configuration de plusieurs composants différents (11) et reproduisant plusieurs propriétés caractéristiques essentielles pour sa fabrication de telle sorte qu'un ensemble de données de modèle de composant générique (11) peut être complété par des données en tenant compte des données de configuration spécifiques au client enregistrées précédemment par son transfert dans un seul ensemble de données de modèle de composant défini (11), lequel reproduit toutes les propriétés caractéristiques essentielles pour la fabrication du système de transport de passagers (1).

11. Produit programme informatique, comprenant des instructions de programme lisibles par machine qui, lorsqu'elles sont exécutées sur un dispositif programmable, amènent le dispositif à mettre en œuvre ou à commander un procédé conformément à l'une des revendications 1 à 9.

12. Support lisible par ordinateur sur lequel est stocké un produit programme informatique conformément à la revendication 11.
